# EUROPÄISCHE PATENTSCHRIFT

(11) **EP 2 494 308 B1**
(45) Veröffentlichungstag und Bekanntmachung des Hinweises auf die Patenterteilung: **30.03.2016**
(21) Anmeldenummer: 10768972.1
(22) Anmeldetag: 27.10.2010
(51) Int. Cl.: G01C 3/08, G01S 7/481, G02B 7/18, G02B 23/04

(54) **ANZIELEINRICHTUNG, INSBESONDERE ZIEL-FERNROHR, FÜR EIN GEODÄTISCHES MESSGERÄT UND OPTISCHE OBJEKTIVEINHEIT-BAUGRUPPE FÜR EINE EBENSOLCHE ANZIELEINRICHTUNG**
DEVICE FOR SIGHTING, IN PARTICULAR SIGHTING TELESCOPE FOR A GEODESIC MEASURING DEVICE AND OPTICAL OBJECTIVE UNIT COMPONENT FOR SUCH A SIGHTING DEVICE
DISPOSITIF DE CIBLAGE, NOTAMMENT TÉLESCOPE DE CIBLAGE, POUR UN APPAREIL DE MESURE GÉODÉSIQUE ET BLOC D'UNITÉ D'OBJECTIF OPTIQUE POUR UN TEL DISPOSITIF DE CIBLAGE

(30) Priorität: 29.10.2009 EP 09174483
(43) Veröffentlichungstag der Anmeldung: 05.09.2012
(73) Patentinhaber: Leica Geosystems AG, 9435 Heerbrugg (CH)
(72) Erfinder: HINDERLING, Jürg, CH-9437 Marbach (CH); STAUFFER, Laurent, CH-9443 Widnau (CH); SAUPE, Frank, CH-9327 Tübach (CH); SCHEJA, Jochen, CH-9435 Heerbrugg (CH)
(74) Vertreter: Kaminski Harmann
(86) Internationale Anmeldenummer: PCT/EP2010/066228
(87) Internationale Veröffentlichungsnummer: WO 2011/051319

(56) Entgegenhaltungen:
- EP-A1- 1 528 358
- DE-C- 689 976
- US-A- 4 037 944
- US-A1- 2003 223 131
- US-A1- 2008 259 449

## Beschreibung

Die Erfindung betrifft eine Anzieleinrichtung, insbesondere ein Ziel-Fernrohr, nach dem Oberbegriff des Anspruchs 1, für ein geodätisches Messgerät mit Winkel- und insbesondere Entfernungsmessfunktionalität. Die Anzieleinheit weist einen optischen Strahlengang zwischen einer Objektiveinheit mit mindestens einer Linse und einer Bild-Einheit, wie einem Kamerasensor und/oder einem Okular, auf. Zudem sind in der Anzieleinrichtung eine Sendeeinheit zur Emission von Messstrahlen als Sendestrahlen zu einem anvisierten Zielobjekt und/oder eine Empfangseinheit zur Erfassung von Messstrahlen als Empfangsstrahlen vorhanden. Ebenso betrifft die Erfindung eine optische Baugruppe für eine Objektiveinheit einer erfindungsgemässen Anzieleinrichtung mit wenigstens einer Linse und wenigstens einem optisches Umlenkmittel zur Einkopplung der Sendestrahlen in den optischen Strahlengang der Anzieleinrichtung und/oder zur Auskopplung der Empfangsstrahlen aus dem optischen Strahlengang. Die Erfindung betrifft ausserdem zwei Verfahren zur Herstellung der erfindungsgemäßen optischen Baugruppe.

Eine Bild-Einheit einer erfindungsgemässen Anzieleinrichtung weist mindestens einen Kamerasensor und/oder ein Okular zur Erfassung und/oder Bereitstellung eines Bildes des anvisierten Zielobjekts auf.

Anzieleinrichtungen, insbesondere Fernrohre, mit optischen Baugruppen zum Ein- und Auskoppeln von Sendestrahlen bzw. Entfernungsmessstrahlen werden für viele, insbesondere geodätische, bautechnische und militärische, Anwendungen benötigt, so beispielsweise zur Entfernungsmessung und Beobachtung oder zur Beobachtung und Bildaufnahme mit einer Kamera. Die geforderte hohe Messgenauigkeit verlangt höchste Positions- und Winkelstabilität der beteiligten Strahlengänge und zugeordneten Baugruppen. Der Begriff "Entfernungsmessstrahlen" oder synonym dazu "Messstrahlen" wird für Strahlen verwendet, die vermittels einer optischen Baugruppe in einem optischen Instrument ein- und ausgespiegelt werden. Dieses umfasst auch Strahlen, die in einem Gerät ein- und ausgespiegelt werden, aber nicht zum Messen verwendet werden, wie Strahlen zur Beobachtung im Fernrohr oder zur Bildaufnahme mit einer Kamera.

Zur Messung von Entfernungen kann bei optischen Vermessungsinstrumenten ein integriertes, auf Lasertechnologie basierendes Entfernungsmessmodul genutzt werden. Zur hochpräzisen Richtungsmessung erfolgt eine Strahlkopplung des Laserstrahls mit der optischen (Ziel-) Achse bzw. dem optischen Strahlengang der Anzieleinrichtung oder allgemeiner Messeinrichtung.

Das Ein- und/oder Auskoppeln von Sendestrahlen bzw. Messstrahlen erfolgt meist über Baugruppen, die eine Linse, ein Ein- und/oder Auskoppelelement bzw. optisches Umlenkelement, beispielsweise einen Spiegel, und eine Halterung, über welche das Ein- und/oder Auskoppelelement bzw. Umlenkelement in den Strahlengang eingebracht wird, umfassen.

Um eine hohe Richtungs- und/oder Distanzmessgenauigkeit der Instrumente garantieren zu können, muss die Kollinearität (Parallelität) des Strahlengangs der Anzieleinrichtung, z.B. Fernrohrs, und des eingekoppelten Laserstrahls selbst unter extremen äusseren Einflüssen (mechanischer Schock, Vibration, Temperaturwechsel) über einen langen Zeitraum gewährleistet sein. Das optische Umlenkelement, wie z.B. ein Spiegel, das den Laserstrahl mit der Zielachse koppelt, muss daher dauerhaft richtungs- und formstabil befestigt werden, ohne die optische Abbildungs-Qualität der Anzieleinrichtung bzw. Fernrohrs im Vermessungsinstrument zu beeinträchtigen.

Die technische Herausforderung besteht darin, einen Laserstrahl richtungs- und lagestabil zu einer Anzieleinrichtung, insbesondere einem Fernrohr wie beispielsweise einem visuellen Zielfernrohr, zu halten, wobei die optische Achse des Fernrohrs wiederum stabil mit einem Winkelsensorsystem verbunden ist. Für das Fernrohr mit dem eingekoppelten Laserstrahlengang wird eine Gesamtgenauigkeit von Winkelsekunden oder Bruchteilen davon gefordert.

In der DE 196 15 601 wird ein Koaxial-Abstandsmessgerät offenbart, in welchem Licht für eine Entfernungsmessung über eine Objektivlinse und eine optische Einkoppelvorrichtung in die optische Achse eines Teleskops eingekoppelt wird und über dieselbe Linse und eine optische Auskoppelvorrichtung aus der optischen Achse des Teleskops ausgekoppelt wird. Zum Einbringen der Ein- und Auskoppelvorrichtung in den optischen Strahlengang des Teleskops dient eine scheibenförmige transparente Prismenhalteplatte als Halterung. Die Kittverbindung geht dabei über die optisch wirksame Fläche, sodass die Verbindungsstelle in diesem Fall optisch einwandfrei sein sollte. Die Nachteile der Verwendung einer solchen Prismenhalteplatte als Halterung für die Ein- und/oder Auskoppelelemente, wie beispielsweise Strahlinstabilitäten, vergrösserte Baulänge des Fernrohrs bzw. Messgeräts, Schwierigkeit der Ausrichtung der Halterung im optischen Strahlengang des Fernrohrs, Empfindlichkeit gegen Temperaturänderungen und mechanische Erschütterungen, werden in der EP 1 662 278 und der WO 2006/056475 ausführlich erörtert.

Zwecks Vermeidung dieser Nachteile als potentielle Fehlerquellen für eine Messung und/oder Zielbeobachtung ist daher zur Verbesserung der Robustheit einer Anzieleinrichtung bzw. eines Fernrohrs und auch aus Kostengründen anzustreben, die Anzahl der konstituierenden Bauelemente möglichst klein zu halten.

Bei der Ein- und Auskoppelung von Messstrahlen zur Entfernungsmessung auf die optische Achse eines Teleskops wird gegebenenfalls - insbesondere wenn das vorgenannte Einkoppelelement die Funktion einer Lichtauskopplung nicht erfüllt - ein weiteres optisches Element benötigt, welches einen Teil der von einem zu vermessenden Objekt reflektierten und/oder gestreuten Strahlung zur Beobachtung im Teleskop durchlässt und einen anderen Teil zu einer Empfangseinrichtung des Entfernungsmessers lenkt. In dem in der DE 196 15 601 beschriebenen Teleskop erfolgt diese Aufteilung über einen dichroitischen Spiegel, welcher als weiteres zusätzliches Element in den Strahlengang des Teleskops eingebracht wird.

In einem in der EP 1 081 459 offenbarten Tachymeter-Fernrohr erfolgt die Aufteilung über ein Strahlenteilerprisma mit teilverspiegelten Flächen. Zusätzlich zu diesem Strahlenteilerprisma muss ein Einkoppelspiegel zum Einkoppeln von Messstrahlen im Tachymeter-Fernrohr mittels einer Halterung befestigt werden, wodurch wiederum bereits erwähnte Ungenauigkeiten, wie Instabilitäten der Strahlrichtung, auftreten. Mit jedem zusätzlichen Element steigt das Risiko des Einflusses störender Umwelteinwirkungen, aber auch die nachteilige Wirkung von Reflexionsverlusten. Ein weiterer wesentlicher Nachteil ist der Platzbedarf jedes einzelnen Bauteils und die dadurch induzierte vergrösserte Baulänge des optischen Instruments.

Zur Lösung des Platzbedarfs für Halterungen zusätzlicher Ein- oder Auskoppelelemente im Strahlengang bzw. der optischen Achse der Objektivlinse wurden in jüngster Zeit verschiedene Vorschläge bekannt, denen gemeinsam ist, dass das optisches Ein- oder Auskoppelement bzw. Umlenkelement mit der planaren Oberfläche einer Plankonvex- oder Plankonkavlinse, im Bereich von deren optischer Achse, verbunden ist.

Die US 6,545,749 offenbart einen Laser-Entfernungsmesser, der ein optisches System mit einer Plankonvexlinse und einem Prisma aufweist, welches auf der planaren Fläche der Linse befestigt ist. Von einer Lasersendeeinheit ausgesendete Sendestrahlenbündel werden vom Prisma als Umlenkelement über die Plankonvexlinse in Richtung eines Zielobjekts gelenkt. Die vom Zielobjekt reflektierten und/oder gestreuten Strahlenbündel werden als Empfangsstrahlenbündel von der Plankonvexlinse gesammelt und zu einem Detektor geleitet.

Da für einen Entfernungsmesser - und allgemein für Abbildung auf einen Detektor oder Sensor mit keiner oder geringer Ortsauflösung - keine bildgebenden Abbildungsqualitäten der verwendeten optischen Komponenten, im Vergleich zu einer für ein Fernrohr geforderten hoch ortsauflösenden Abbildungsqualität, erforderlich sind, kann die Planlinse für diese Anwendung ohne weitere Vorkehrungen zur Verbesserung der Abbildungsqualität eingesetzt werden. Durch die planare Fläche der Linse bedingt treten zwar entsprechend grössere Abbildungsfehler auf, sodass der Bildkreisradius - der Radius des durch Abbildungsfehler bedingten Zerstreuungskreises in der Bildebene - um ein Vielfaches (z.B. 20 mal) grösser ist, als es für ein abbildendes System eines Fernrohres möglich bzw. akzeptabel ist. Der Durchmesser des Bildkreises (Lichtflecks des Empfangsstrahlenbündels in der Bildebene) kann beispielsweise mehr als 100µm betragen, während er in einem Fernrohr nur einen bis wenige Mikrometer betragen darf. Da übliche Photodetektoren ohne Anforderung an eine bildgebende Ortsauflösung jedoch einen lichtempfindlichen Bereich mit Durchmessern von 200µm bis 1000µm aufweisen, ist trotz des vergrösserten Bildkreises die gesamte Empfangsstrahlung erfassbar und auswertbar.

In der WO 2006/056475 werden zur Ermöglichung des Einsatzes einer zu der in der US 6,545,749 ähnlichen Kombination einer "Planlinse" (Plankonvex- oder Plankonkavlinse) mit einem optischen Umlenkelement zu einer optischen Baugruppe in einem Fernrohr und Erfüllung der diesbezüglichen Anforderungen an die Abbildungsqualität verschiedene Möglichkeiten diskutiert und Vorkehrungen vorgeschlagen, wie Abbildungsfehler, insbesondere durch die "Planlinse", vermieden oder korrigiert und eine geforderte übliche visuelle Abbildungsqualität erreicht werden können.

Den vorgenannten Vorschlägen in der US 6,545,749 und der WO 2006/056475 zur Lösung des Platzbedarfs für Halterungen zusätzlicher Ein- oder Auskoppelelemente im Strahlengang bzw. der optischen Achse der Objektivlinse sind jedoch mehrere Nachteile und/oder Probleme für ihre Umsetzung gemeinsam:
- Eine insbesondere gegen mechanische Erschütterungen stabile Verbindung eines Umlenkelements mit einer planaren Befestigungsfläche an einer Linse erfordert eine korrespondierende planare Fläche der Linse.
- Sofern nicht Linse und Umlenkelement einstückig, beispielsweise durch Spritzguss, gefertigt worden sind, ist eine solche beispielsweise durch Klebung erzeugte Baugruppe aus Linse und Umlenkmittel mit nur einer gemeinsamen verbindenden Oberfläche in ihrer Stabilität auch noch anfällig gegen beispielsweise thermische Spannungen durch Temperaturänderungen und gegen mechanische Erschütterungen.
- Da sich eine Verklebung von Umlenkmittel und Linse relativ grossflächig inmitten des optischen Strahlengangs der Linse befindet, müssen sehr hohe Anforderungen an die optischen Eigenschaften des Klebstoffs gestellt werden. Beispielsweise muss der Klebstoff optisch transparent und möglichst auch fluoreszenz- und lumineszenzfrei sein. Ausserdem sollte der Klebstoff einen gleichen oder ähnlichen Brechungsindex wie die vorgenannte Linse aufweisen.
- Die vorgenannten hohen Anforderungen an die optischen Eigenschaften des Klebstoffs schränken die Auswahlmöglichkeiten für einen Klebstoff mit auch mechanisch optimalen Eigenschaften stark ein: Um das optische Umlenkelement, wie z.B. einen Spiegel, das den Laserstrahl mit der Zielachse koppelt, richtungsstabil zu befestigen, darf der Klebstoff nur einen kleinen thermischen Ausdehnungskoeffizienten aufweisen; denn beim Einsatz in der Praxis können Temperaturen zwischen etwa - 40°C und +70°C auftreten, und die Richtungsstabilität, gefordert in der Grössenordnung von Winkelsekunden, darf in einem solch grossen Temperaturbereich nicht beeinträchtigt werden. Ausserdem sollte die Wasseraufnahme des Klebstoffs, auch unter Bedingungen bis zu nahe 100% relativer Luftfeuchtigkeit, möglichst niedrig sein.
- Die Verklebung von geschliffenen Oberflächen ist grundsätzlich schwierig und potentiell von geringer Stabilität unter stark schwankenden Umwelteinflüssen, da die verklebte Fläche aufgrund niedriger Oberflächenrauhigkeit relativ klein ist.
- Die Verwendung von Plankonvex- oder Plankonkav-Linsen, wie in der EP 1 662 278 und der WO 2006/056475 beschrieben, erfordert erheblichen zusätzlichen Aufwand, wie in diesen beiden Dokumenten gleichfalls offenbart, um im Endergebnis trotzdem eine gute Abbildungsqualität eines Fernrohrs zu erzielen. In der US-A1-4037944 wir die Befestigung eines Umlenkelementes auf einem Metallblock durch die Verwendung eines zylindrischen Zapfens offenbart, wobei der Zapfen in eine entsprechende Öffnung in der Halterung eingegossen wird.

In der EP-A1-152858 wird eine axiale Befestigung einer ersten Linse im Körper einer zweiten linse offenbart.

Eine Aufgabe der vorliegenden Erfindung besteht darin, eine Anzieleinrichtung, insbesondere ein (Ziel-)Fernrohr, für ein geodätisches Vermessungsgerät mit Winkel- und Entfernungsmessfunktionalität und der Funktion zum Ein- und/oder Ausspiegeln von Messstrahlen, insbesondere für einen integrierten Entfernungsmesser, mit wenigen optischen Komponenten und dennoch gattungsmässig hoher Abbildungsqualität, kompakter - insbesondere kurzer - Baulänge, kostengünstiger Bauart und hoher Messgenauigkeit und Robustheit gegenüber Umwelteinflüssen, wie Temperaturschwankungen, mechanischer Schock und/oder Vibrationen, bereitzustellen.

Aufgabe der Erfindung ist auch, eine verbesserte optische Baugruppe für eine Objektiveinheit einer Anzieleinrichtung zum Ein- und gegebenenfalls auch Ausspiegeln von Messstrahlen in bzw. aus dem optischen Strahlengang der Anzieleinrichtung mit möglichst wenigen Bauteilen anzugeben, um Messungenauigkeiten, Baulänge des Messinstruments und Kosten zu verringern sowie die Robustheit gegenüber Umwelteinflüssen wie Temperatur, Schock und Vibration zu steigern.

Aufgabe der Erfindung ist dabei insbesondere, ein optisches Umlenkelement, wie z.B. einen Spiegel, als Bestandteil der optischen Baugruppe, das beispielsweise einen Laserstrahl mit einer Zielachse zur Richtungsmessung koppelt, dauerhaft richtungsstabil im Strahlengang einer Anzieleinrichtung, beispielsweise eines Ziel-Fernrohrs, zu befestigen, ohne die optische Qualität der Anzieleinrichtung zu beeinträchtigen. Dabei muss die Kollinearität des Strahlengangs der Anzieleinrichtung bzw. des Fernrohrs und eines eingekoppelten Laserstrahls selbst unter extremen äusseren Einflüssen (mechanischer Schock, Vibration, Temperaturwechsel) über einen langen Zeitraum gewährleistet sein. Für das Vermessungsinstrument bzw. Fernrohr mit einem eingekoppelten Laserstrahlengang wird eine Gesamtgenauigkeit von Winkelsekunden oder Bruchteilen davon gefordert.

Eine weitere Aufgabe der vorliegenden Erfindung besteht darin, ein Verfahren zur Herstellung einer erfindungsgemässen optischen Baugruppe bereitzustellen.

Diese Aufgaben werden durch die Gegenstände der unabhängigen Ansprüche gelöst. Merkmale, die die Erfindung in alternativer oder vorteilhafter Weise weiterbilden, sind den abhängigen Patentansprüchen zu entnehmen.

Die erfindungsgemässe Anzieleinrichtung ist vorgesehen für ein geodätisches Vermessungsgerät mit Winkel- und insbesondere auch Entfernungsmessfunktionalität und kann beispielsweise ausgebildet sein als ein Ziel-Fernrohr. Die Anzieleinrichtung ist mindestens ausgestattet mit einer Objektiveinheit, welche eine optische Achse der Anzieleinrichtung definiert und mindestens eine Linse aufweist, und einer Bild-Einheit, wobei zwischen der Objektiveinheit und der Bild-Einheit ein optischer Strahlengang definiert ist. Die Bild-Einheit weist mindestens einen Kamerasensor und/oder ein Okular zur Erfassung und/oder Bereitstellung eines Bildes eines anvisierten Zielobjekts auf. Das Bild des anvisierten Zielobjekts kann über eine Strahlaufteilung z.B. auch gleichzeitig für eine Kamera und ein Okular bereitgestellt werden.

Als die mindestens eine Linse der Objektiveinheit soll durchgehend, d.h. in Beschreibung und Ansprüchen, sowohl ein diffraktiv wirkendes optisches Element, d.h. eine Linse im eigentlichen Sinne, jedoch ausdrücklich auch eine optische Planplatte ohne diffraktive Wirkung, verstanden werden.

Die Anzieleinrichtung weist zudem eine Sendeeinheit zur Emission von Messstrahlen als Sendestrahlen und /oder eine Empfangseinheit zur Erfassung von empfangenen Messstrahlen als Empfangsstrahlen auf. Zur Einkopplung der Sendestrahlen in den optischen Strahlengang und/oder zur Auskopplung der Empfangsstrahlen aus dem optischen Strahlengang ist des Weiteren ein entsprechendes Umlenkmittel im Strahlgang der Anzieleinrichtung vorgesehen.

Erfindungsgemäss weist die wenigstens eine Linse eine zylinderförmige, sich in Richtung der optischen Achse erstreckende, insbesondere durchgehende Ausnehmung um die optische Achse auf. Des Weiteren weist das Umlenkmittel einen zylinderförmigen, sich derart innerhalb der Ausnehmung der Linse erstreckenden und derart mit Form und Ausmass der Ausnehmung korrespondierenden Befestigungs-Abschnitt auf, dass sich zwischen Aussenmantelfläche des Befestigungs-Abschnitts und zumindest einem Teil einer durch die Ausnehmung definierten Innenmantelfläche der Linse ein Klebespalt ergibt. Gemäss der Erfindung ist das Umlenkmittel vermittelt über einen im Klebespalt befindlichen Klebstoff an der wenigstens einen Linse befestigt.

Ein wesentlicher Aspekt dabei ist, dass der Klebstoff gleichmässig im Klebespalt und um den Befestigungs-Abschnitt derart verteilt ist, dass die Mantelfläche des Befestigungs-Abschnitts im Wesentlichen komplett von Klebstoff überzogen ist und ohne direkte Berührung mit der Linse in der Ausnehmung sitzt. Dadurch werden Spannungen homogen über den Klebespalt verteilt.

Die Oberflächen der Linse werden bezeichnet als "Vorderoberfläche" im Strahlengang in Richtung zum Zielobjekt und entsprechend als "rückseitige Oberfläche", welche der "Vorderoberfläche" gegenüber liegt. Die optische Achse der Objektiveinheit verläuft durch die Zentren der beiden den Linsenflächen zugeordneten Kugelschalen. Die vorgenannte Linse kann, wie obig erwähnt, auch als eine optisch transparente Planplatte, Spiegelplanplatte oder Planplatten-Filter, z.B. aus Glas, ohne eigene Strahlbrechungsfunktion ausgebildet sein. Im Speziellen ist die Ausnehmung, welche einen Durchmesser d aufweist, als ein durch die Vorderoberfläche und die rückseitige Oberfläche durchgehendes Loch, d.h. Durchgangsloch, ausgebildet.

Die Ausnehmung kann dabei senkrecht zur optischen Achse eine runde oder vieleckige Grundfläche aufweisen.

Als die zylinderförmige Ausnehmung und als der korrespondierende zylinderförmige Befestigungs-Abschnitt soll durchgehend, d.h. in Beschreibung und Ansprüchen, auch eine - z.B. durch Fertigungstoleranzen bedingte - leicht konische Form verstanden werden. Wesentlich soll dabei jedoch sein, dass die dadurch definierte Klebeverbindung selbst (d.h. der mit Klebstoff gefüllte Klebespalt zwischen Aussenmantelfläche des Befestigungs-Abschnitts und Innenmantelfläche der Linse) einen möglichst geringfügigen Teil der für die Abbildung des Zielobjekts optisch wirksamen Fläche darstellt.

Sind dabei die Ausnehmung und der Befestigungs-Abschnitt des Umlenkmittels - senkrecht zur optischen Achse - mit einer runden Grundfläche ausgebildet, so kann der zylinderförmige Abschnitt des Umlenkmittels beispielsweise einen Aussendurchmesser d' des als Befestigungs-Abschnitt vorgesehenen Teils senkrecht zur optischen Achse der Linse aufweisen. Die vorderseitige oder rückseitige zylinderförmige Ausnehmung oder die Öffnung der Linse kann einen Innendurchmesser von d aufweisen, wobei der Aussendurchmesser d' kleiner als der Innendurchmesser d ist.

Der vorgenannte Klebspalt hat eine durchschnittliche Breite b = (d-d')/2 und ist zwischen der Aussenmantelfläche des Befestigungsabschnitts und der Innenmantelfläche der Ausnehmung der Linse erzeugt.

Erfindungsgemäss ist also das Umlenkmittel vermittelt über einen im Klebespalt befindlichen Klebstoff an der wenigstens einen Linse oder Planplatte, welches somit als Trägerbauteil für das Umlenkmittel dient, befestigt.

Das optische Umlenkelement dient primär dazu, das von der Sendeeinheit kommende Sendestrahlenbündel unter einem ersten vorgegebenen Umlenkwinkel in Ausbreitungsrichtung des Sendestrahlenbündels in Richtung des Zielobjekts und/oder die Empfangsstrahlen in Richtung der Empfangseinheit der Anzieleinrichtung umzulenken. Dieses geschieht typischerweise durch Einspiegelung des Sendestrahlenbündels in bzw. durch Ausspiegelung des Empfangsstrahlenbündels aus dem vorgenannten optischen Strahlengang, insbesondere parallel oder konzentrisch zur optischen Achse der Linse. Beispielsweise kann das Umlenkelement also dazu dienen, die vom Zielobjekt reflektierte und/oder gestreute Strahlung als Empfangsstrahlenbündel, das über die Objektiveinheit in einen zur optischen Achse im Wesentlichen parallelen und zu der optischen Achse typischerweise im Wesentlichen auch symmetrischen Strahlengang gerichtet wird, aus der optischen Achse zur Empfangseinheit unter einem zweiten vorgegebenen Umlenkwinkel umzulenken.

Bei der Sendeeinheit kann es sich beispielsweise um einen Lasersender einer in der Anzieleinrichtung integrierten Entfernungsmesseinheit handeln, sodass die Sendestrahlen beispielsweise als Laser-Entfernungsmessstrahlen emittiert werden. Zusätzlich oder Alternativ können die Sendestrahlen jedoch auch zur Erzeugung eines projizierten, punktförmigen Lichtflecks am Zielobjekt (Laser-Pointer), wobei der Lichtfleck zur hochpräzisen Anzielung des Zielobjekts dient, handeln.

Als Empfangsstrahlen können beispielsweise am Zielobjekt reflektierte Teile der Entfernungsmessstrahlen durch eine als Teil der Entfernungsmesseinheit ausgebildete Empfangseinheit erfasst werden. Jedoch kann zusätzlich oder alternativ auch ein ortsauflösender Empfänger als die Empfangseinheit vorhanden sein, wobei der Empfänger einen Teil eines Moduls zur automatischen Zielerkennung darstellt und zur Erfassung von Zielerkennungs-Messstrahlen als Empfangsstrahlen ausgebildet ist.

Die Anordnung des Umlenkmittels kann, muss aber nicht, auf der optischen Achse der Linse erfolgen. Die Positionierung auf beziehungsweise möglichst nahe der optischen Achse der Linse ist gerade für Messungen auf nicht-kooperative Zielobjekte (d.h. nicht reflektierende Ziele) wünschenswert und vorteilhaft. Für Messungen mit reflektierten Strahlen mit hoher Parallelität bei Messungen auf kooperative Ziele (d.h. reflektierende Ziele) sollte das Umlenkmittel in geeigneter Art und Weise so positioniert werden, dass die durch das Umlenkelement bedingte Abschattung der reflektierten und/oder gestreuten Strahlung möglichst gering gehalten wird.

Insbesondere kann sich der Befestigungs-Abschnitt derart innenmantelflächen-berührungsfrei innerhalb der Ausnehmung erstrecken, dass ein durchgängiger Klebespalt und der im Klebespalt befindliche Klebstoff gleichmässig verteilt vorliegen, insbesondere wobei sich der Befestigungs-Abschnitt im Wesentlichen zentrisch innerhalb der Ausnehmung erstreckt und derart mit Form und Ausmass der Ausnehmung korrespondiert, dass der Klebespalt eine gleichmässige, definierte Weite aufweist und insbesondere rotationssymmetrisch ist

Des Weiteren kann der Befestigungs-Abschnitt des Umlenkmittels spannungsminimiert in der Ausnehmung der Linse befestigt sein. Spannungsminimierung wird erreicht, indem der Befestigungs-Abschnitt innerhalb der Ausnehmung oder Öffnung der Linse ohne unmittelbare Berührung mit deren Innenfläche angeordnet und der Klebstoff möglichst gleichmässig im Klebespalt verteilt ist, insbesondere wobei der Zapfen möglichst zentrisch eingeklebt ist und das Trägerbauteil somit nicht berührt. Die homogene Spannungsverteilung über den Klebespalt soll dabei gewährleisten, dass insbesondere unter Einfluss grosser Temperaturschwankungen (z.B. zwischen -40°C und +70°C) keine oder nur minimale mechanische Spannungsunterschiede über die gesamte Klebung, aufgrund von thermisch bedingter Ausdehnung oder Schrumpfung von Linse, optischem Umlenkmittel und Klebstoff, oder hoher Luftfeuchtigkeit (z.B. bis nahe 100% relativer Luftfeuchtigkeit), aufgrund von Wasseraufnahme insbesondere durch den Klebstoff, auftreten. Ausserdem liegt insbesondere eine möglichst homogene Verteilung des Klebstoffs im Klebspalt vor. Eine symmetrische Spannungsverteilung im Klebespalt kann minimalste Veränderungen des Kräftegleichgewichts und damit eine vergleichsweise enorm hohe Masshaltigkeit gewährleisten.

Weiterhin kann der Befestigungsabschnitt des Umlenkmittels derart zur Ausnehmung der Linse angeordnet sein, dass der Zapfen nicht zentrisch zur Ausnehmung der Linse angeordnet ist und dennoch die Innenfläche der Linse nicht berührt. Auch in einer solchen erfindungsgemässen Ausführung kann im Klebespalt zwischen Innenfläche der Linse und Befestigungsabschnitt des Umlenkmittels eine den Befestigungsabschnitt durchgängig umgebenden Klebstoffschicht vorhanden sein, wobei die Klebung über ihren Verlauf unterschiedliche Klebstoffschichtdicken aufweisen kann. Durch eine derartige durchgängige Schicht kann das Auftreten von Spannungsunterschieden über den Verlauf der Klebung hinweg verhindert, bzw. minimiert werden. Für eine Gewährleistung einer durch die verschiedenen Ausführungsformen des erfindungsgemässen Gegenstandes angestrebten erfindungsgemässen Funktionalität kann die Ausgestaltung der Verklebung des Umlenkmittels in der Ausnehmung als ein entscheidender Faktor angesehen werden. Diese Ausgestaltung der Klebung ist ein wichtiges Kriterium für das Erreichen einer Robustheit gegenüber Umwelteinflüssen, wie Temperaturschwankungen, mechanischer Schock und/oder Vibrationen, hingegen kann die Positionierung des Umlenkmittels in der Linse einen weiteren durchaus wichtigen Faktor hinsichtlich der Anordnung und Positionierung der Bauteile zueinander darstellen.

In einer speziellen Ausführungsform ist das optische Umlenkmittel einstückig als ein den Befestigungs-Abschnitt aufweisender Zapfen beispielsweise aus Glas ausgebildet, von dem eine - insbesondere zum Zielobjekt hingewandte-Einkoppel-Endseite derart relativ zur optischen Achse abgeschrägt und mit einer reflektierenden Beschichtung versehen ist, dass die Einkopplung der Sendestrahlen (3) in den Strahlengang in Richtung des Zielobjekts koaxial zur optischen Achse erfolgt. Im Speziellen beträgt die Abschrägung einen Winkel, welcher, bezogen auf eine Längsachse des Umlenkmittels, welche parallel zur vorgenannten optischen Achse der Objektiveinheit zwischen der Einkoppel-Endseite und einer gegenüberliegenden Auskoppel-Endseite des Zapfens verläuft, gleich der Hälfte eines geforderten ersten Umlenkwinkels für auftreffende Sendestrahlen durch die reflektierende Beschichtung ist.

Des Weiteren kann das optische Umlenkmittel einstückig als ein den Befestigungs-Abschnitt aufweisender Zapfen ausgebildet sein, von dem eine - insbesondere vom Zielobjekt weggewandte - Auskoppel-Endseite derart relativ zur optischen Achse abgeschrägt und mit einer reflektierenden Beschichtung versehen ist, dass eine Auskopplung der Empfangsstrahlen aus dem Strahlengang zur der Empfangseinheit hin erfolgt. Dabei kann die Abschrägung gleich einem Winkel, bezogen auf die Längsachse, entsprechend 90° vermindert um einen halben geforderten zweiten Umlenkwinkel sein.

Im Speziellen können diese beiden Ausführungsformen kombiniert werden z.B. mit einem Zapfen aus opakem Grauglas, sodass der Zapfen also zwei getrennte reflektierende Flächen aufweist, sowohl zur Einspiegelung des Sendestrahlenbündels in die optische Achse der Objektiveinheit über seine reflektierende Einkoppel-Endseite als auch zur Ausspiegelung des Empfangsstrahlenbündels zur Empfangseinheit über seine reflektierende Auskoppel-Endseite. Durch diese Anordnung wird in sehr hohem Masse ein Übersprechen von Sendestrahlung zur Empfangseinheit, in der Grössenordnung einer Unterdrückung von 10⁻¹¹ bis 10⁻¹², verhindert.

Insbesondere kann ein in Richtung der Auskoppel-Endseite des Zapfens gerichteter Teil einen (geringfügig) kleineren Durchmesser als den Durchmesser d' des in Richtung der Einkoppel-Endseite gerichteten Teils aufweisen. Dieses ist vorteilhaft in einem Verbindungsprozess von Linse und Umlenkmittel bzw. Zapfen in einem Verklebungsverfahren.

Im Speziellen wird ein UV-Klebstoff verwendet, der durch UV-Licht aushärtbar ist. Zur Erfüllung der Anforderungen an die Invarianz der erfindungsgemässen optischen Baugruppe gegen den Einfluss unterschiedlicher Temperaturen hat der Klebstoff insbesondere einen thermischen Ausdehnungskoeffizienten, der möglichst nahe beim verwendeten Werkstoff liegt. Im Fall von Glas kann z.B. ein thermischer Ausdehungskoeffizient von weniger als 60 ppm/K, im Speziellen von weniger als 40 ppm/K, genügen. Ausserdem kann der Klebstoff insbesondere einen Wasseraufnahmekoeffizienten von weniger als 2%, im Speziellen weniger als 0,5%, aufweisen.

Das optische Umlenkmittel kann insbesondere ausgebildet sein als Prisma, Würfel mit einer Teilerschicht oder Spiegelschicht, Vorder- oder Rückflächenspiegel, Halterungsspiegel oder Winkelspiegel. Ein Vorderflächenspiegel, der erzeugt wird durch eine auf dem Umlenkmittel bzw. einem abgeschrägten Ende des Zapfens aufgebrachte reflektierende Beschichtung, hat den Vorteil, dass der Anteil unerwünschter Streustrahlung vom Sender in den Empfänger verringert werden kann.

Als Sender bzw. Sendeeinheit der erfindungsgemässen Anzieleinrichtung wird insbesondere ein Laser eingesetzt. Bei der Sendestrahlung kann es sich je nach Anwendungszweck um divergente und/oder beugungsbegrenzt kollimierte, nichtsichtbare und/oder sichtbare Strahlung handeln.

Die Empfangseinheit der erfindungsgemässen Anzieleinrichtung kann als Empfänger einen ortsauflösenden Detektor (z.B. CCD-Array, CCD-Zeile oder PSD) oder nicht ortsauflösenden Detektor (z. B. Photodiode oder Photomultiplier) aufweisen. Weitere Bestandteile der Empfangseinheit können elektronische Auswerteeinheiten, z.B. zur Bestimmung von (Puls-)Lichtlaufzeiten oder Wellenfrontphasen oder Interferenzmustern und gegebenenfalls deren Änderungen sein.

Eine Weiterbildung der erfindungsgemässen Anzieleinrichtung umfasst eine Objektiveinheit zwei Linsen mit jeweils einem optischen Umlenkmittel. Dabei weisen die zwei Linsen jeweils eine zylinderförmige, sich in Richtung der optischen Achse erstreckende Ausnehmung um die optische Achse auf. Das jeweilige Umlenkmittel weist einen zylinderförmigen, sich derart innerhalb der jeweiligen Ausnehmung der zugeordneten Linse erstreckenden und derart mit Form und Ausmass der jeweiligen Ausnehmung korrespondierenden Befestigungs-Abschnitt auf, dass sich jeweils zwischen Aussenmantelfläche des Befestigungs-Abschnitts und zumindest einem Teil einer durch die Ausnehmung definierten Innenmantelfläche der jeweiligen Linse ein Klebespalt ergibt. Dabei ist jeweils das Umlenkmittel vermittelt über einen im Klebespalt befindlichen Klebstoff an der jeweiligen Linse befestigt.

In einer speziellen Ausführungsform ist die erfindungsgemässe Anzieleinrichtung mit einem Spiegelsystem, über welches das Empfangsstrahlenbündel zum Umlenkmittel und/oder zur Empfangseinheit gerichtet wird, ausgestattet.

Ein weiterer Gegenstand der Erfindung ist eine optische Baugruppe für eine Objektiveinheit einer erfindungsgemässen Anzieleinrichtung. Die optische Baugruppe umfasst wenigstens eine Linse und wenigstens ein optisches Umlenkmittel zur Einkopplung der Sendestrahlen in den optischen Strahlengang der Anzieleinrichtung und/oder zur Auskopplung der Empfangsstrahlen aus dem optischen Strahlengang. Erfindungsgemäss weist die wenigstens eine Linse) eine zylinderförmige, sich in Richtung der optischen Achse erstreckende, insbesondere durchgehende Ausnehmung um die optische Achse auf. Das optische Umlenkmittel ist ausgestattet mit einem zylinderförmigen, sich derart innerhalb der Ausnehmung der Linse erstreckenden und derart mit Form und Ausmass der Ausnehmung korrespondierenden Befestigungs-Abschnitt, dass sich zwischen Aussenmantelfläche des Befestigungs-Abschnitts und zumindest einem Teil einer durch die Ausnehmung definierten Innenmantelfläche der Linse ein Klebespalt ergibt. Erfindungsgemäss ist das Umlenkmittel vermittelt über einen im Klebespalt befindlichen Klebstoff an der wenigstens einen Linse befestigt.

Die vorgenannte Linse ist im Speziellen als eine Konvexlinse ausgebildet. Die Linse kann aber auch eine Meniskuslinse, Konkav-, Plankonvex- oder Plankonkavlinse sein.

Eine Weiterbildung der erfindungsgemässen optischen Baugruppe umfasst zwei Linsen der vorgenannten Art mit jeweils einem optischen Umlenkmittel.

Eine Ausführung der optischen Baugruppe mit zwei getrennten Linsen mit jeweils einem Umlenkmittel, nämlich einem ersten Umlenkmittel zum Einspiegeln von Sendestrahlung in die optische Achse der ersten Linse und einem zweiten Umlenkmittel zum Ausspiegeln von Empfangsstrahlung aus der gemeinsamen optischen Achse der beiden Linsen zu einer Empfangseinheit, bietet den Vorteil, dass eine weiter verbesserte Trennung von Sende- und Empfangskanal erreicht wird, d.h. dass unerwünschter Crosstalk zwischen Sender und Empfänger verringert und die Messgenauigkeit erhöht wird. Damit wird also ein ähnlich vorteilhafter Effekt der Trennung von Sender- und Empfangsstrahlung erreicht wie durch die vorgenannte Ausführungsform eines zylindrischen Zapfens z.B. aus Grauglas mit zwei getrennten spiegelnden Flächen als optischem Umlenkmittel zur Einspiegelung des Sendestrahlenbündels in die optische Achse der Linse über die reflektierende Einkoppel-Endseite des Zapfens und Ausspiegelung des Empfangsstrahlenbündels zur Empfangseinheit über die reflektierende Auskoppel-Endseite des Zapfens.

In einer weiteren vorteilhaften Ausführungsform umfasst die erfindungsgemässe optische Baugruppe ein Spiegelsystem, über welches das Empfangsstrahlenbündel zum Umlenkmittel und/oder zur Empfangseinheit gerichtet wird.

Eine erfindungsgemässe optische Baugruppe kann zum Ein- und Auskoppeln von Messstrahlen, beispielsweise für einen Entfernungsmesser in ein Fernrohr, verwendet werden. Selbstverständlich können genauso Messstrahlen für beispielsweise ein optisches Interferometer, eine Zielsucheinheit, eine Kamera, oder eine andere Messeinheit über die optische Baugruppe in ein Fernrohr oder ein anderes Messinstrument ein- und ausgespiegelt werden. Die Linse wird in ihrer Funktion als Linse verwendet, hat aber gleichzeitig die zusätzliche Funktion einer Halterung. Damit wird im Messgerät ein Bauteil weniger benötigt.

Die erfindungsgemässe Anzieleinrichtung kann ausgebildet sein als ein Fernrohr. Insbesondere in dieser Ausführungsform weist die Anzieleinrichtung zusätzlich ein Bildaufrichtsystem auf. Beispielsweise sind Objektiveinheit mit Umlenkmittel, Bildaufrichtsystem, Fokussiereinheit, Okular und/oder Kamera entlang der optischen Achse angeordnet.

In einem erfindungsgemässen Fernrohr bzw. Anzieleinrichtung kann vorteilhaft ein weiteres Bauteil eingespart werden, wenn auch das Bildaufrichtsystem für zwei Funktionen verwendet wird. Dazu wird das Bildaufrichtsystem zwischen Umlenkmittel und Fokussierlinse angeordnet. Dann kann das Bildaufrichtsystem zusätzlich zu dessen Funktion der Bildumkehrung dazu verwendet werden, einen Teil der von einem Zielobjekt reflektierten und/oder gestreuten Strahlung auf das Umlenkmittel zu richten.

Die erfindungsgemässe Anzieleinrichtung kann auch als Panfokal-Fernrohr ausgebildet sein. Ein Panfokal-Fernrohr ist durch eine mit der Fokussierdistanz zunehmende Vergrösserung gekennzeichnet, dabei sind Vergrösserungen bis gegen 50fach gebräuchlich. Derartig hohe Vergrösserungen verlangen nach einer hochauflösenden, beugungsbegrenzten Abbildungsqualität. Dank wegfallender Hilfsbauteile wie mechanische Fassung sind Vignettierungen im abbildenden Strahlengang des Fernrohrs reduziert, was die Bildschärfe begünstigt und die Anzielgenauigkeit zur Richtungsmessung verbessert.

Insbesondere kann eine kompakte und kostengünstige Bauart des Panfokal-Fernrohrs erreicht werden, wenn eine Linse einer ersten Objektiveinheit als Halterung für das Umlenkmittel und eine Linse einer zweiten Objektiveinheit als Spiegelsystem verwendet wird. Die als Panfokal-Fernrohr ausgebildete Anzieleinrichtung ist insbesondere ausgestattet mit einer ersten und einer zweiten Objektiveinheit mit jeweils wenigstens einer Linse, einer Sendeeinheit zum Aussenden eines Sendestrahlenbündels, einer Empfangseinheit zum Empfangen des vom Zielobjekt reflektierten und/oder gestreuten Sendestrahlenbündels als Empfangsstrahlenbündel, einem Bildaufrichtsystem, einer Fokussiereinheit und einem Okular und/oder Kamerasensor. Die erste und zweite Objektiveinheit, das Bildaufrichtsystem, die Fokussiereinheit und Okular bzw. Kamerasensor sind entlang der optischen Achse des Panfokal-Fernrohrs angeordnet. Des Weiteren weist das Panfokal-Fernrohr eine erfindungsgemässe optische Baugruppe mit wenigstens einem Umlenkmittel zum Einspiegeln des Sendestrahlenbündels von der Sendeeinheit in den optischen Strahlengang des Panfokal-Fernrohrs in Richtung eines Zielobjekts und gegebenenfalls zusätzlich zum Ausspiegeln des Empfangsstrahlenbündels aus dem optischen Strahlengang des Panfokal-Fernrohrs zur Empfangseinheit auf. Das wenigstens eine Umlenkmittel ist ebenfalls an der optischen Achse des Panfokal-Fernrohrs angeordnet.

Vorteilhaft ist die zweite Objektiveinheit des Panfokalfernrohrs zwischen Umlenkmittel und Bildaufrichtsystem positioniert, und eine Linse der zweiten Objektiveinheit wird als Spiegelsystem zum Richten des Empfangsstrahlenbündels zum Umlenkmittel und/oder zur Empfangseinheit verwendet. Ausserdem ist im Speziellen das Bildaufrichtsystem mit wenigstens einer teildurchlässigen Schicht ausgebildet ist, über welche teildurchlässige Schicht Strahlen aus dem Strahlengang des Panfokal-Fernrohrs zu wenigstens einer zweiten Empfangseinheit. insbesondere einer Kamera, ausgekoppelt werden. Dabei kann des Weiteren ein weiterer Strahlteiler zwischen der Fokussiereinheit und dem Okular angeordnet sein. Ausserdem ist im Speziellen wenigstens eine dritte Empfangseinheit, insbesondere eine Kamera, bereitgestellt, wobei über den weiteren Strahlteiler Strahlen aus dem Strahlengang des Panfokal-Fernrohrs zur dritten Empfangseinheit umgelenkt werden. Ausserdem kann am weiteren Strahlteiler eine Zielachsenmarkierung angeordnet sein.

Ein weiterer Gegenstand der Erfindung ist eine optische Baugruppe für die vorgängig beschriebene Objektiveinheit der Anzieleinrichtung, wobei die optische Baugruppe zumindest aus der Linse und dem Umlenkmittel gebildet wird.

Sämtliche obige Definitionen, Beschreibungen und vorteilhafte Weiterbildungen bezüglich der erfindungsgemässen Ausbildung und Befestigung von Linse und Umlenkmittel können analog auch auf den Erfindungsgegenstand der optischen Baugruppe übertragen und angewendet werden.

Zudem bezieht sich die Erfindung auf ein erstes und ein zweites Verfahren zur Herstellung einer solchen optischen Baugruppe.

Im ersten erfindungsgemässen Herstellungsverfahren wird der Befestigungs-Abschnitt des optischen Umlenkmittels in Richtung der optischen Achse der Linse in die Ausnehmung der Linse eingeführt, wobei die Linse horizontal (senkrecht zum Gravitationsvektor) gelagert und die Längsachse des Befestigungs-Abschnitts parallel oder koaxial zur optischen Achse der Linse (d.h. in Richtung des Gravitationsvektors) ausgerichtet ist. Die Linse und das Umlenkmittel sind dabei derart gelagert, dass das Umlenkmittel und die Linse in einer horizontalen Ebene - im Wesentlichen reibungsfrei - relativ gegeneinander beweglich sind.

Der Klebstoff wird in den Klebespalt eingebracht, sodass sich unter Wirkung von Eigenspannungen, insbesondere durch Kapillarkräfte und durch Grenzflächenspannungen zwischen Klebstoff und Materialoberflächen, im Klebstoff dieser über den Klebespalt verteilt und, ebenso bewirkt durch die Eigenspannungen im Klebstoff, ein durchgehender Klebspalt zwischen der Innenmantelfläche der Linse und der Aussenmantelfläche des Befestigungs-Abschnitts erzeugt wird.

Im über den Klebespalt verteilten Zustand härtet der Klebstoff aus, sodass das Umlenkmittel vermittelt über den Klebstoff an der wenigstens einen Linse befestigt ist.

Durch dieses Verfahren kann der Klebstoff sowohl gleichmässig über den Klebespalt verteilt als auch, bewirkt durch die Eigenspannungen im Klebstoff, der Befestigungs-Abschnitt in der Ausnehmung im Wesentlichen zentrisch und somit der Klebespalt mit gleichmässiger Weite zwischen der Innenmantelfläche der Linse und der Aussenmantelfläche des Befestigungs-Abschnitts erzeugt werden.

Bei diesem ersten erfindungsgemässen Verfahren kann der Klebstoff über den Klebespalt weiterhin derart verteilt werden, dass der Befestigungs-Abschnitt in der Ausnehmung entweder - wie oben beschrieben - zentrischen oder aber auch nicht-zentrisch angeordnet wird, wobei der Klebespalt dennoch durchgängig zwischen der Innenmantelfläche der Linse und der Aussenmantelfläche des Befestigungs-Abschnitts vorliegt. Durch den durchgängigen Klebespalt können Spannungen homogen über den Klebespalt verteilt werden. Insbesondere bei einer schnellen Aushärtung des Klebstoffes kann die benötigte Zeit für eine Selbstzentrierung - bewirkt durch die Eigenspannungen im Klebstoff - nicht ausreichend sein und damit die Aushärtung in einer noch-nicht-zentrischen Anordnung erfolgen. Des Weiteren können z.B. Erschütterungen oder andere mechanische Einflüsse während der Verklebung eine zentrische Ausrichtung der Teile zueinander verhindern.

Durch die relativ zueinander im Wesentlichen reibungsfrei bewegliche Lagerung der Linse gegenüber dem Umlenkmittel sowie kraft Wirkung der Kapillarkräfte im Klebstoff kann sich der Klebstoff gleichmässig um den Befestigungs-Abschnitt verteilen, sodass die Mantelfläche des Befestigungs-Abschnitts im Wesentlichen komplett von Klebstoff überzogen ist und ohne direkte Berührung mit der Linse in der Ausnehmung sitzt. Dadurch werden Spannungen homogen über den Klebespalt verteilt.

Im Speziellen wird - zumindest während sich der Klebstoff im Klebespalt verteilt - die Linse oder das Umlenkmittel in einer horizontalen Ebene schwimmend gelagert, sodass dadurch die relative Beweglichkeit in einer horizontalen Ebene der Linse und des Umlenkmittels gegeneinander gewährleistet wird. Das jeweils andere Element, welches nicht im Wesentlichen reibungsfrei schwimmend gelagert wird, kann währenddessen positionsfix festgehalten werden.

Des Weiteren kann, während des Einbringens, des Verteilens und insbesondere des Aushärtens des Klebstoffs, die Linse zusammen mit dem - mit dem Befestigungs-Abschnitt in die Ausnehmung eingeführten - Umlenkmittel um eine vertikale Achse gedreht werden.

Mit anderen Worten kann gemäss dieser ersten Variante des Herstellungsverfahrens beispielsweise der Spiegelzapfen senkrecht zum Schwerefeld gefasst und in die Linse eingeführt werden. Die Linse wird dann möglichst reibungsfrei zum Zapfen gelagert. Es ist darauf zu achten, dass Gravitation die Lage der Linse nicht beeinflusst. Nach der Applizierung eines Kapillarklebers mit geeignet hoher Adhäsionskraft kann sich der Klebspalt selbstständig durch dem Klebstoff zugeordneten Eigenspannungen und zu den Oberflächen des Klebspalts sich aufbauenden Grenzflächenspannungen ausrichten. Durch die Kapillarkräfte werden eine gleichmässige Ausprägung der Weite des Klebspalts und ein vollständiges Überziehen der Mantelfläche des Befestigungs-Abschnitts mit Klebstoff bewirkt, sodass Spannungen homogen über den Spalt ausgeglichen sind. D.h., durch die Grenzflächenspannung zwischen Kleber und Glasteilen kann sich zwischen dem Innendurchmesser d der Ausnehmung oder Öffnung der Linse und dem Aussendurchmesser d' ein rotationssymmetrischer Klebspalt bilden.

Bei dieser beispielhaften selbstzentrierenden Klebung dürfen keine äusseren Kräfte wie z.B. Gravitation oder Fliehkräfte wirken; diese können z.B. durch langsame Rotation der Baugruppe oder perfekte Nivellierung minimiert oder gar eliminiert werden, sodass die Gravitationskraft ausschliesslich senkrecht zum Klebspalt steht. Der Kleber verteilt sich durch die Adhäsionskräfte an den Glas- oder Metalloberflächen des Umlenkmittels bzw. der Linse homogen im Spalt. Umlenkmittel und Linse richten sich so zueinander aus, dass ein gleichmässiger Klebespalt entsteht.

Im einfachsten Fall wird die Baugruppe lotrecht platziert, so dass die Gravitationskraft ausschliesslich senkrecht zum Klebspalt steht und damit keinen Einfluss auf die selbstzentrierende Wirkung des Klebstoffes ausübt.

D.h., dass eine dynamische Anordnung eine gravitationsbezogen austarierte Montage gewährleisten kann, indem entweder vor Injizierung des Klebstoffs und/oder während dessen Injizierung der reibungs- und berührungsfrei gegenüber der Linse gehaltene Befestigungs-Abschnitt mit der mit ihm zu verklebenden Linse rotiert wird. Dabei ist die Drehachse insbesondere parallel oder koinzident mit der optischen Achse der Linse ausgerichtet. Dabei ist die Rotationsgeschwindigkeit so ausgewählt, beispielsweise etwa 5-10 Umdrehungen pro Minute, dass ein Einfluss von Fliehkräften auf den Verklebungsprozess gleichfalls vermieden wird. Die Rotation um die optischen Achse bewirkt, dass sich der Einfluss der Gravitationskraft im Mittel aufhebt, und dass der Befestigungs-Abschnitt in dem Klebspalt bzw. der Klebspalt bezüglich Linse und Stift ohne Gravitationsbeeinflussung ausgerichtet wird. Dadurch wird erreicht, dass sich der injizierte Klebstoff im Wesentlichen nur unter Einwirkung von Kapillarkräften und damit spannungsfrei im Klebspalt verteilt.

Entsprechend dem zweiten erfindungsgemässen Verfahren zur Herstellung einer optischen Baugruppe wird der Befestigungs-Abschnitt des optischen Umlenkmittels in Richtung der optischen Achse der Linse in die Ausnehmung der Linse eingeführt, wobei die Linse horizontal gelagert und die Längsachse des Befestigungs-Abschnitt parallel oder koaxial zur optischen Achse der Linse ausgerichtet ist.

Der Befestigungs-Abschnitt in der Ausnehmung wird nun mit hochpräzisen Verstelleinrichtungen, insbesondere unter Beobachtung des Klebespalts mit einer Mikroskopkamera oder unter Verwendung von Bilderfassungs- und -auswertemitteln, derart justiert, dass der Befestigungs-Abschnitt in der Ausnehmung innenmantelflächen-berührungsfrei (d.h. ohne direkte Berührung mit der Innenmantelfläche der Ausnehmung) sitzt und einen durchgehenden Klebespalt zwischen der Innenmantelfläche der Linse und der Aussenmantelfläche des Befestigungs-Abschnitts aufweist. Insbesondere kann die Justierung und hochpräzise Verstellung dabei derart erfolgen, dass der Befestigungs-Abschnitt im Wesentlichen zentriert (mittig) in der Ausnehmung sitzt und der Klebspalt eine gleichmässige Weite aufweist. Alternativ kann dabei auch eine nicht-zentrische Anordnung der beiden Bauteile zueinander erfolgen, wobei der Klebespalt zwar durchgängig zwischen Befestigungs-Abschnitt und Ausnehmung vorliegt jedoch keine einheitliche Dicke über den Verlauf aufweist. Danach wird Klebstoff in den Klebespalt eingebracht, sodass sich dieser im Wesentlichen unter Wirkung von Eigenspannungen, insbesondere Kapillarkräfte, im Klebstoff gleichmässig über den Klebespalt verteilen kann und, während die Linse und das Umlenkmittel in der justierten Stellung festgehalten werden, anschliessend in homogen verteiltem Zustand - und mit homogener Spannungsverteilung über den Klebespalt - aushärtet.

Insbesondere kann, während der Klebstoff in den Klebespalt eingebracht wird und/oder sich gleichmässig über den Klebespalt verteilt, der Befestigungs-Abschnitt in der Ausnehmung mit den hochpräzisen Verstelleinrichtungen auch nachjustiert werden.

In dem zweiten Herstellungsverfahren wird - mit anderen Worten beschrieben - der Befestigungs-Abschnitt des optischen Umlenkmittels in Richtung der optischen Achse in die Ausnehmung der Linse eingeführt. Dabei ist der Spiegelzapfen senkrecht zur Linse gefasst und kann manipulatorisch in alle drei Dimensionen präzise bewegt werden. Der Klebspalt wird z.B. mit einer Mikroskopkamera oder anderen optischen Vergrösserungsinstrumenten beobachtet und das Umlenkmittel derart unter Beobachtung des Klebespalts mit hochpräzisen Verstelleinrichtungen bekannter Bauart justiert, bis der Befestigungs-Abschnitt berührungslos zur Ausnehmung (insbesondere zentrisch in der Ausnehmung) positioniert ist. Anschliessend kann der Klebespalt - in dieser fixierten Stellung von Linse und Umlenkmittel zueinander - mit dem Klebstoff, beispielsweise einem Kapillar-Klebstoff, gefüllt werden und ausgetrocknet werden lassen. Die Positionierung kann dabei zentrisch oder auch nicht-zentrisch erfolgen.

Im Speziellen kann für beide erfindungsgemässen Verfahren ein Kapillarkleber, insbesondere ein UV-Klebstoff, mit hoher Adhäsions- oder Kapillarkraft eingesetzt werden. Bei vertikaler Ausrichtung zum Schwerefeld kann üblicherweise eine gleichmässige Verteilung des Klebstoffs über den Befestigungsabschnitt gewährleistet werden.

Neben der Festigkeit des Klebstoffs beeinflusst auch die konstruktive Gestalt der Verbindung die Lagestabilität des Umlenkmittels/Zapfens erheblich. Mit abnehmender Klebfilmdicke nimmt die Scherfestigkeit der Verbindung zu. Insbesondere soll der Spalt zwischen Befestigungs-Abschnitt und Umlenkmittel möglichst schmal sein. Weiters sind die Eigenspannungen im Kleber, hervorgerufen durch Schwund, durchwegs inhomogen, da sich Eigenspannungen im Inneren stets im Gleichgewicht befinden. Auch diesbezüglich ist ein schmaler Klebspalt von Vorteil.

An den Klebstoff werden die gleichen Anforderungen, insbesondere bezüglich thermischen Ausdehnungskoeffizienten und Wasseraufnahme, gestellt, wie vorangehend im Zusammenhang mit dem erfindungsgemässen optischen Bauelement offenbart.

Gemäss einer speziellen Ausführungsform kann die Ausnehmung eine Senkung als Reservoir für den - bei Befestigung des Umlenkmittels an der Linse in den Klebespalt einzubringenden - Klebstoff aufweisen.

Ist die Ausnehmung als durchgehende Ausnehmung ausgeführt, kann die durchgehende Ausnehmung aufweisen:
□ sowohl einerends die Reservoir-Senkung als erste Senkung für den bei Befestigung des Umlenkmittels in den Klebespalt einzubringenden Klebstoff
□ als auch anderenends eine zweite Senkung als Klebstoffausbreitungsstopp für den sich bei Befestigung des Umlenkmittels im Klebespalt - insbesondere durch Kapillarkräfte - verteilenden Klebstoff.

Durch diese erfindungsgemässe Herstellungsverfahren wird vorteilhaft erreicht, dass das optische Umlenkelement wesentlich genauer und lagestabiler als in herkömmlichen Anordnungen und Herstellungsverfahren für gattungsgemässe optische Bauelemente in der optischen Achse der Linse befestigt werden kann. Die Verklebungsbereiche zwischen Linse und Umlenkmittel bzw. Befestigungs-Abschnitt führen zu keiner signifikanten Beeinflussung oder Beeinträchtigung durchtretender Lichtstrahlenbündel, da deren Durchtritt tangential und nicht senkrecht zum Verklebungsbereich erfolgt. Damit entfallen vorteilhaft hohe optische Anforderungen an die Eigenschaften des Klebstoffs, so dass eine grössere Auswahl von Klebstoffen mit zusätzlich gefordertem niedrigem thermischem Ausdehnungskoeffizient und geringem Wasseraufnahmevermögen bei Aussetzung gegenüber hoher Luftfeuchtigkeit besteht.

Die Verklebung in einer umlaufenden Ausnehmung oder Öffnung der Linse ist wesentlich stabiler als eine Verklebung zwischen zwei planparallelen Oberflächen zwischen optischem Umlenkmittel und Linse. Die Innenwand bzw. Innenmantelfläche der Ausnehmung oder Öffnung der Linse kann eine deutlich höhere Rauhigkeit aufweisen im Vergleich zu einer optisch polierten Glasoberfläche. Bei nicht zu grosser Rauhigkeit nimmt der Flächeninhalt einer rauen, geschliffenen Oberfläche in erster Näherung mit steigender Oberflächenrauhigkeit quadratisch zu. Dadurch wird also die zu verklebende Oberfläche stark vergrössert, was die Saugwirkung beim Klebprozess und die Stabilität der Verklebung verbessert. Dank der Rauhigkeit der zu verklebenden Teile ist die Neigung zum Abschälen des Klebers geringer als bei polierten Oberflächen. Zugleich ist das Risiko einer Beeinträchtigung der Stabilität der Verklebung zwischen Linse und optischem Umlenkmittel bzw. Befestigungs-Abschnitt, durch langzeitliche Degradierungserscheinungen des Klebstoffs unter mechanischer, thermischer oder feuchtigkeitsbedingter Beanspruchung über längere Zeiträume, beispielsweise auch durch Eindringen von Feuchtigkeit in den Klebstoff, minimiert.

Mit den erfindungsgemässen Herstellungsverfahren für eine erfindungsgemässe optische Baugruppe wird gesamthaft insbesondere eine Zielgenauigkeit für die Auskopplung eines Sendestrahlenbündels in der Grössenordnung von wenigen Winkelsekunden erreicht, die mit herkömmlichen Systemen unter bekannten Herstellungsverfahren nicht möglich ist.

Ausserdem besteht auf Grund der Ausgestaltungsart der erfindungsgemässen optischen Baugruppe und der erfindungsgemässen Verfahren zu deren Herstellung nicht mehr die Erfordernis zu einer Verbindung einer planaren Oberfläche einer Linse mit einer planaren Oberfläche des optischen Umlenkmittels. Damit entfallen die Erfordernisse an sonst durch die plankonvexe oder plankonkave Linse im Strahlengang erforderlichen zusätzlichen Korrekturen und übrigen Verbesserungen der weiteren Komponenten eines Vermessungsinstruments, insbesondere eines Fernrohrs, um im Endergebnis eine geforderte Abbildungsqualität zu erzielen. Damit können die Herstellungskosten eines mit einer erfindungsgemässen optischen Baugruppe ausgestatteten Fernrohrs deutlich gesenkt werden.

Erfindungsgemässe Anzieleinrichtungen und optische Baugruppen werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
Fig. 1a, 1b, 1c und 1e schematisch drei Ausführungsbeispiele erfindungsgemässer optischer Baugruppen für eine Objektiveinheit einer erfindungsgemässen Anzieleinrichtung in einer Querschnittdarstellung,
Fig. 1d eine Ausschnittsvergrösserung der optischen Baugruppe gemäss Fig. 1c,
Fig. 1f und 1g schematische Vorderansichten zweier Ausführungsbeispiele erfindungsgemässer optischer Baugruppen,
Fig. 2a schematisch eine erste Ausführungsform der optischen Baugruppe aus Fig. 1c, die einem Entfernungsmesser zugeordnet ist,
Fig. 2b schematisch eine zweite Ausführungsform der optischen Baugruppe aus Fig. 1e, die einem Entfernungsmesser zugeordnet ist,
Fig. 3 schematisch ein Fernrohr, als ein erstes Beispiel einer erfindungsgemässen Anzieleinrichtung, mit einer erfindungsgemässen optischen Baugruppe zum Ein- und Ausspiegeln von Messstrahlen in den optischen Strahlengang des Objektivs bzw. Fernrohrs und
Fig. 4 schematisch ein Panfokal-Fernrohr, als zweites Beispiel einer erfindungsgemässen Anzieleinrichtung, mit einer erfindungsgemässen optischen Baugruppe zum Ein- und Ausspiegeln von Messstrahlen in den optischen Strahlengang des Panfokal-Fernrohrs.

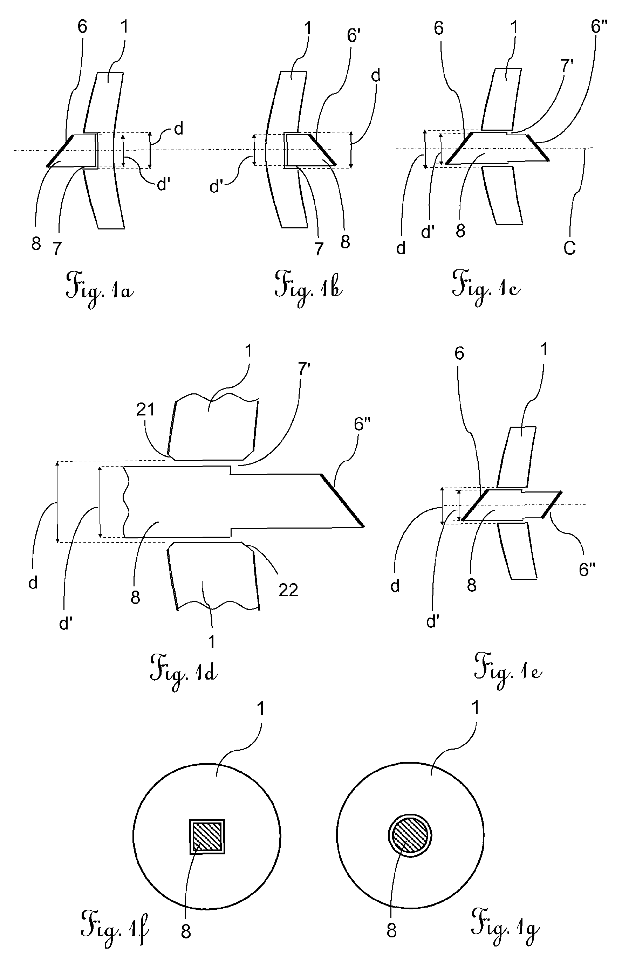

Fig. 1 zeigt in den Teilfiguren 1a, 1b, 1c und 1e mögliche Ausführungsbeispiele einer erfindungsgemässen optischen Baugruppe. Der Baugruppe sind hier eine Linse 1 und ein Umlenkmittel 8 mit reflektierenden Flächen 6,6',6" zugeordnet. Die Linse 1 wird im Folgenden immer als Konvexlinse dargestellt, kann aber auch als Konkav-, Plankonvex- oder Meniskuslinse oder als eine transparente Platte ohne strahlfokussierende oder strahlaufweitende Funktion ausgebildet sein.

Die Oberflächen der Linse 1 werden bezeichnet als "Vorderoberfläche" im Strahlengang in Richtung zu einem Zielobjekt und entsprechend als "rückseitige Oberfläche", welche der "Vorderoberfläche gegenüber liegt. Die Linse 1 hat eine optische Achse C.

Fig. 1a zeigt eine Linse 1 mit einer vorderseitigen zylinderförmigen, sich in Richtung der optischen Achse erstreckenden Ausnehmung 7, welche einen Durchmesser d hat. In der vorderseitigen Ausnehmung 7 ist, insbesondere konzentrisch mit der optischen Achse C, ein optisches Umlenkmittel 8 mit einem zylinderförmigen Abschnitt bzw. Befestigungs-Abschnitt und einer reflektierenden Fläche 6 angeordnet, wobei der zylinderförmige Abschnitt in die Ausnehmung 7 eingeführt ist.

Das optische Umlenkmittel 8 mit dem zylinderförmigen Abschnitt weist einen Aussendurchmesser d' auf, wobei der Aussendurchmesser d' kleiner als der Innendurchmesser d ist, so dass zwischen dem Aussendurchmesser d' und dem Innendurchmesser d ein Spalt als Klebespalt mit einer durchschnittlichen Breite b = (d-d')/2 erzeugt ist, der mit einem Kapillarklebstoff, zur Erzeugung einer stabilen Verbindung von Linse 1 und einem Befestigungs-Abschnitt als Teil des zylinderförmigen Abschnitts des Umlenkmittels 8, gefüllt ist. Das optische Umlenkmittel 8 berührt dabei die Linse 1 nicht unmittelbar, auch nicht in axialer Richtung. Mögliche Ausführungsformen des optischen Umlenkmittels 8 bzgl. dessen strahlumlenkender Funktion, sind vorangehend offenbart worden. In dieser Ausführungsform ist das Umlenkmittel 8 mit einer reflektierenden Fläche 6 für die Umlenkung eines Sendestrahlenbündels in die optische Achse C in Richtung eines Zielobjekts vorgesehen (Sendestrahlenbündel und Zielobjekt nicht dargestellt).

Figur 1b zeigt eine zu Figur 1a spiegelsymetrische Anordnung von Linse 1 und Umlenkmittel 8 mit einer reflektierenden Fläche 6'. Das optische Umlenkmittel 8 mit reflektierender Fläche 6' und dem zylinderförmigen Befestigungsabschnitt weisen ebenfalls einen Aussendurchmesser d' einer Querschnittsprojektion des optischen Umlenkmittels 8 und des Befestigungs-Abschnitts senkrecht zur optischen Achse der Linse auf die rückseitige Ausnehmung 7 der Linse 1 auf. Auch in diesem Fall besteht keine unmittelbare Berührung zwischen dem optischen Umlenkmittel 8 und der Linse 1. In dieser Ausführungsform ist die reflektierende Fläche 6' für die Umlenkung eines Empfangssstrahlenbündels aus der optische Achse C in Richtung einer Empfangseinheit vorgesehen (Empfangsstrahlenbündel und Empfangseinheit sind nicht dargestellt).

Figur 1c zeigt eine Kombination der Anordnungen gemäss Figur 1a und Figur 1b. Die Linse 1 weist eine durchgehende lochförmige Öffnung 7' mit einem Durchmesser d auf. Durchgängig eingeführt in die Öffnung 7' ist ein als Zapfen ausgebildetes Umlenkmittel 8. Das Umlenkmittel 8 weist entlang der optischen Achse C der Linse 1 zwei einander entgegengesetzt angeordnete reflektierende Oberflächen 6, 6'' auf.

Im Speziellen ist das als Zapfen ausgebildete Umlenkelement mit dem zwischen den beiden reflektierenden Oberflächen 6, 6'' befindlichen zylindrischen Abschnitt und dem Befestigungs-Abschnitt einstückig angefertigt. Der zylindrische Bereich weist eine Längsachse auf, von dem eine Einkoppel-Endseite, in Ausbreitungsrichtung eines Sendestrahlenbündels zu einem Zielobjekt, unter einem Winkel entsprechend einem halben geforderten ersten Umlenkwinkel gegen die Längsachse des zylindrischen Abschnitts abgeschrägt und mit einer reflektierenden Beschichtung versehen ist und so eine reflektierende Fläche 6 bildet. Eine Auskoppel-Endseite des Zapfens, entgegengesetzt zur Einkoppel-Endseite, ist unter einem Winkel, entsprechend 90° vermindert um einen halben geforderten zweiten Umlenkwinkel, gegen die Längsachse des zylindrischen Abschnitts abgeschrägt und mit einer reflektierenden Beschichtung versehen und bildet so eine reflektierende Fläche 6''.

Das optische Umlenkmittel 8 mit den reflektierenden Flächen 6, 6'' und dem dazwischen befindlichen zylinderförmigen Abschnitt weisen einen Aussendurchmesser d' einer Querschnittsprojektion auf die Öffnung 7' auf die Vorderoberfläche der Linse auf, wobei der Aussendurchmesser d' kleiner als der Innendurchmesser d der Öffnung 7' ist, so dass zwischen dem Aussendurchmesser d' und dem Innendurchmesser d ein Spalt als Klebespalt, insbesondere optimiert für einen Kapillarkleber, erzeugt ist.

Im Speziellen weist der in Richtung der Auskoppel-Endseite des Zapfens gerichtete Teil einen (geringfügig) kleineren Durchmesser als dem Durchmesser d' des in Richtung der Einkoppel-Endseite gerichtete Teil auf. Dieses ist vorteilhaft zur Gestaltung eines Klebreservoirs, um überschüssigen Kleber möglichst kräftelos zu deponieren (Sendestrahlenbündel, Zielobjekt, Empfangsstrahlenbündel und Empfangseinheit sind dabei aus Gründen einer einfacher verständlichen Darstellungsweise nicht gezeigt).

In Figur 1d sind zur Verdeutlichung die letztgenannten bzgl. Figur 1c offenbarten Merkmale der erfindungsgemässen optischen Baugruppe in einer Ausschnittsvergrösserung dargestellt.

Wie in der vergrösserten Darstellung in Figur 1d ersichtlich ist, kann die durchgehende Ausnehmung (7') aufweisen
□ einerends eine erste Senkung (22) oder Fase als Reservoir für den bei Befestigung des Umlenkmittels in den Klebespalt einzubringenden Klebstoff und
□ anderenends eine zweite Senkung (21) oder Fase als Klebstoffausbreitungsstopp für den sich bei Befestigung des Umlenkmittels im Klebespalt - insbesondere durch Kapillarkräfte - verteilenden Klebstoff. Die zweite Senkung (21) oder Fase als Klebstoffausbreitungsstopp ist eine Stelle mit niedriger Kapillarkraft, sodass ein Weiterfliessen des Klebers (z.B. Heraustropfen aus dem Spalt beim Injizieren des Klebstoffs bei Herstellung) an dieser Stelle verhindert werden kann.

Figur 1e zeigt eine weitere Ausführungsform einer erfindungsgemässen optischen Baugruppe als Abwandlung der Anordnung gemäss Figur 1c mit dem Unterschied, dass die Einspiegelung des Sendestrahlenbündel in die optische Achse C und Ausspiegelung von Empfangsstrahlung in einander entgegengesetzte Richtungen bezüglich der optischen Achse C der Linse 1 erfolgten.

Figuren 1f und 1g schematische Vorderansichten zweier Ausführungsbeispiele optischer Baugruppen mit einer Linse 1 und einem Umlenkmittel 8. Erfindungsgemäss weist dabei wiederum die Linse 1 eine zylinderförmige Ausnehmung um deren optische Achse auf. Das Umlenkmittel 8 ist ebenso zylinderförmig ausgeführt und erstreckt sich derart mit einem Befestigungs-Abschnitt innerhalb der Ausnehmung, dass sich zwischen Aussenmantelfläche des Befestigungs-Abschnitts und zumindest einem Teil einer durch die Ausnehmung definierten Innenmantelfläche der Linse ein Klebespalt ergibt. Das Umlenkmittel 8 ist vermittelt über einen im Klebespalt befindlichen Klebstoff an der Linse 1 befestigt.

In Figur 1f weisen die zylinderförmige Ausnehmung der Linse 1 sowie der zylinderförmige Befestigungs-Abschnitt des Umlenkmittels 8 eine quadratische Grundfläche, in Figur 1g hingegen eine runde Grundfläche auf.

Alternativ zu den in den Figuren 1f und 1g gezeigten Ausführungsformen können die zylinderförmige Ausnehmung der Linse 1 sowie der zylinderförmige Befestigungs-Abschnitt des Umlenkmittels 8 jedoch auch eine ovale oder andersartig vieleckige Grundfläche aufweisen.

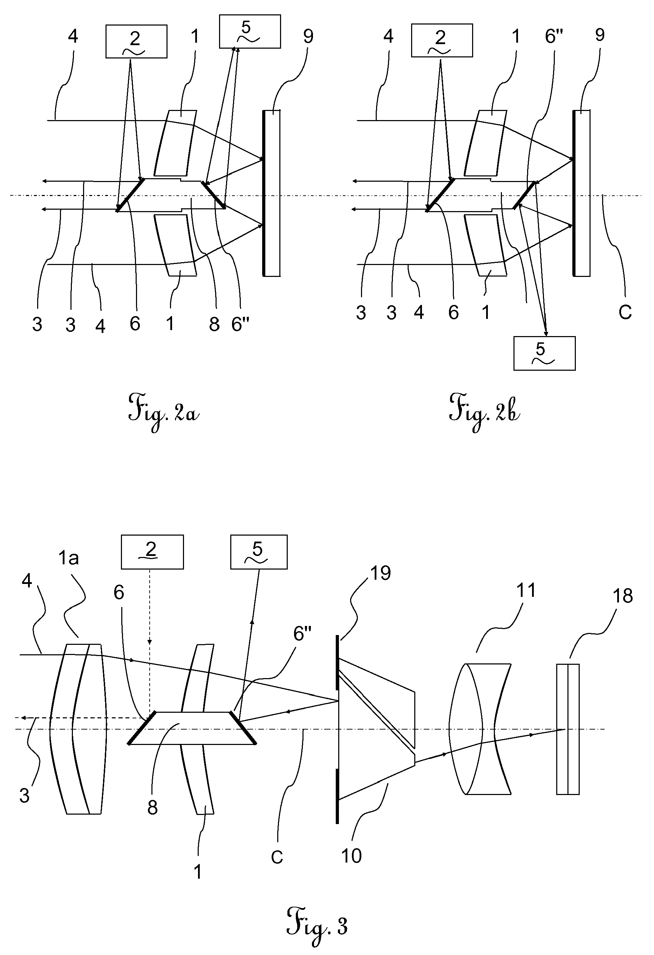

Fig. 2a zeigt eine mögliche Ausbildung einer optischen Baugruppe nach Fig. 1c mit einem Spiegelsystem 9. Diese Ausführungsform ist beispielsweise geeignet für eine Kombination mit einem Entfernungsmesser oder einem Richtungssensor mit Kamera. Ein von einer Sendeeinheit 2 ausgehendes Sendestrahlenbündel 3 trifft auf die reflektierende Fläche 6 des Umlenkmittels 8 und wird von der reflektierende Oberfläche 6 in die optische Achse C eingespiegelt und in Richtung eines hier nicht dargestellten Zielobjekts gerichtet. Das Zielobjekt kann kooperativ - d.h. selbstleuchtend oder ein Reflektor - sein, es kann aber genauso nicht kooperativ sein, wie es z.B. eine natürliche raue Oberfläche ist. Am Zielobjekt wird das Sendestrahlenbündel 3 reflektiert und/oder gestreut. Der reflektierte und/oder gestreute Teil des Sendestrahlenbündels 3 mit demzufolge gleicher Wellenlänge wie das Sendestrahlenbündel 3 - als Empfangsstrahlenbündel 4 bezeichnet, der auf die Linse 1 trifft, wird vermittels der Linse 1 zum Spiegelsystem 9 gelenkt. Das Spiegelsystem 9, welches in z.B. einem Fernrohr auch zur Bildumkehr verwendet werden kann, ist hier als ein Glaskörper bzw. planare Glasplatte mit einer dichroitischen Reflexionsschicht dargestellt. Die dichroitische Reflexionsschicht ist reflektierend für Licht mit einer Wellenlänge entsprechend der Wellenlänge des Sendestrahlenbündels, z.B. für rotes oder infrarotes Licht, und durchlässig für Licht anderer Wellenlänge, beispielsweise im kürzeren sichtbaren Spektralbereich. Das Spiegelsystem 9 kann selbstverständlich auch eine andere Form haben, beispielsweise trapezförmig, ausgebildet sein, und es kann auch aus einem anderen optischen Material gebildet sein. Genauso kann das Spiegelsystem 9 aus mehr als nur einem Stück, beispielsweise als Abbe/König-Prisma, ausgebildet sein. Mittels des Spiegelsystems 9 wird das Empfangsstrahlenbündel 4 zur reflektierenden Oberfläche 6'' des Umlenkmittels 8 gerichtet und vermittels der reflektierenden Oberfläche 6''zu einer Empfangseinheit 5 umgelenkt. Das Empfangsstrahlenbündel 4 könnte auch direkt vom Spiegelsystem 9 zur Empfangseinheit 5 gelenkt werden. Es ist natürlich auch ohne Spiegelsystem 9 möglich, das Empfangsstrahlenbündel 4 zu empfangen, z.B. indem die Empfangseinheit 5 im Wesentlichen an der Position des Spiegelsystems 9, aber im abbildenden Abstand zur Linse 1 angeordnet wird.

Das Umlenkmittel 8 mit reflektierenden Oberflächen 6, 6'' ist hier auf der optischen Achse C der Linse 1, bzw. auch des Messgeräts, angeordnet. Eine solche Anordnung 8 in der optischen Achse C der Linse 1 und/oder des Messinstruments, in welches die optische Baugruppe eingebaut ist, zusammenfällt, ist für viele Anwendungen, wie z.B. eine Entfernungsmessung in einem Zielfernrohr, vorteilhaft. Im Allgemeinen kann das Umlenkmittel 8 möglichst klein ausgebildet werden, um einerseits die durch das Umlenkmittel bedingte Abschattung des Empfangsstrahlenbündels 4 - insbesondere bei kurzen Distanzen zum Zielobjekt - möglichst gering zu halten, und andererseits eine durch eine zentrale Pupillen-Vignettierung erzeugte Beugungsunschärfe ("Blur") in der Bildebene zu reduzieren.

Fig. 2b zeigt in Abwandlung zur Anordnung gemäss Figur 2a eine mögliche Ausbildung einer optischen Baugruppe nach Fig. 1e. Abgesehen von der umgekehrt orientierten spiegelnden Fläche 6'' und der Anordnung der Empfangseinheit 5 in Figurenebene unterhalb statt oberhalb der optischen Achse C der Linse 1 entspricht die Darstellung von Fig. 2b derjenigen von Fig. 2a.

Fig. 3 zeigt ein Fernrohr als Beispiel einer erfindungsgemässen, in welchem eine optische Baugruppe aus Fig. 1c zum Einspiegeln von Sendestrahlen in die optische Achse des Fernrohrs und Ausspiegeln von Messstrahlen, beispielsweise für eine Entfernungsmessung, verwendet wird. Ein von einer Sendeeinheit 2 ausgesandtes Sendestrahlenbündel 3 einer Wellenlänge, beispielsweise im roten oder infraroten Spektralbereich, wird anhand der reflektierenden Fläche 6 des Umlenkmittels 8 und einer Objektiveinheit 1a, die gegebenenfalls aus mehreren Einzellinsen besteht, gegen ein Zielobjekt gerichtet, und das am Zielobjekt reflektierte und/oder gestreute Strahlenbündel trifft als Empfangsstrahlenbündel 4 auf die Objektiveinheit 1a und die Linse 1 und wird zu einem Bildaufrichtsystem 10 geleitet. Das Bildaufricht- oder Bildumkehrsystem 10 ist hier als Pechan-Prisma mit einer für Strahlung teildurchlässigen, insbesondere spektral dichroitischen, Schicht ausgebildet. Ein Teil der vom Zielobjekt reflektierten und/oder gestreuten Strahlen (beispielsweise im roten oder infraroten Spektralbereich entsprechend der Wellenlänge des Sendestrahlenbündels 3) wird am Bildaufrichtsystem 10 zur reflektierenden Fläche 6'' des Umlenkmittels 8 reflektiert und/oder gestreut.

Mittels der Fernrohr-Optik empfangene Strahlenbündelanteile, welche von der dichroitischen Beschichtung des Bildaufrichtsystems 10 transmittiert werden, werden von der Fokussiereinheit 11 weiter in Richtung des Okulars 12 geleitet. Aus Gründen der Übersichtlichkeit sind diese Strahlenbündelanteile erst im Strahlengang des Fernrohrs nach dem Bildaufrichtsystem schematisch eingezeichnet.

Zur Anzielung eines Zielobjekts kann zusätzlich z.B. eine Zielachsenmarkierung 18 in die Bildebene des visuellen Fernrohrkanals eingebracht sein. Die Pupille 19 der eigentlichen visuellen Abbildung kann im Fernrohr nach innen gelegt sein, während die Objektiveinheit 1a und die Linse 1 der erfindungsgemässen optischen Baugruppe mit ihrer vollen Apertur das zurückkommende Empfangsstrahlenbündel 4 sammeln und via Umlenkmittel 6'' zum Empfänger 5 leiten. Die optische Baugruppe im Fernrohr kann selbstverständlich auch zum Ein- und Auskoppeln von Strahlen für eine Kamera oder ein anderes elektro-optisches Gerät verwendet werden.

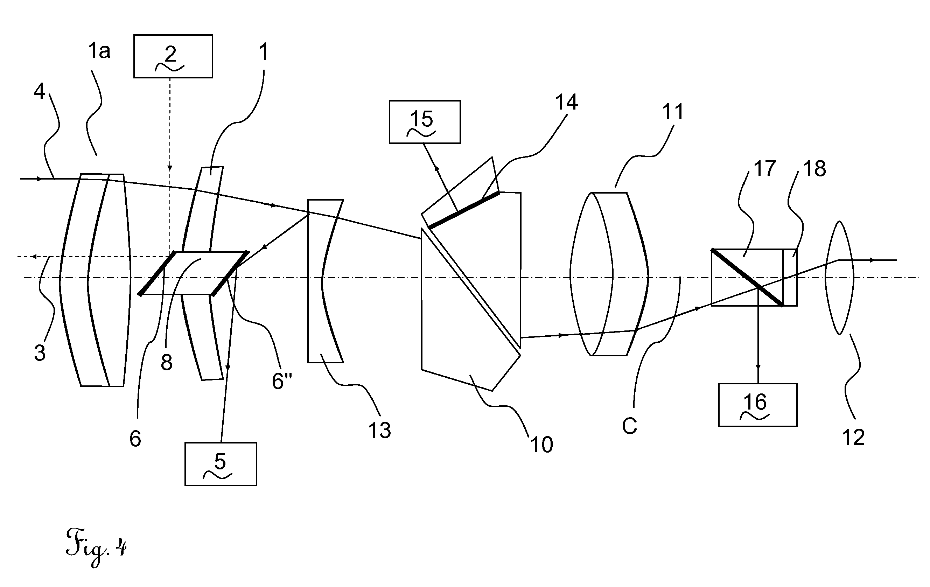

In Fig. 4 ist als zweites Beispiel einer erfindungsgemässen Anzieleinrichtung ein Panfokal-Fernrohr mit einer optischen Baugruppe aus Fig. 1e gezeigt. Ein Panfokal-Fernrohr zeichnet sich durch ein mit der Entfernung variables Gesichtsfeld aus. Im Nahbereich wird wegen des vergrösserten Gesichtsfelds eine bessere Objektübersicht erhalten, und im Fernbereich bleibt wegen der erhöhten Winkelvergrösserung eine gute Objektauflösung bestehen. Das Panfokal-Fernrohr umfasst zwei Objektiveinheiten mit Linsen 1a und 13, ein Bildaufrichtsystem 10, eine Fokussiereinheit 11 und ein Okular 12 und ist so aufgebaut, dass eine hohe visuelle Winkelvergrösserung auf grosse Distanzen und eine geringere Winkelvergrösserung auf kleine Distanzen erreicht wird. In dem dargestellten erfindungsgemässen Panfokal-Fernrohr ist die erfindungsgemässe optische Baugruppe mit der Linse 1 und dem optischen Umlenkmittel 8 mit reflektierenden Flächen 6, 6'' in der Figurenebene rechts von der ersten Objektiveinheit 1a angeordnet.

Ein von einer Sendeeinheit 2 ausgesandtes Sendestrahlenbündel 3 einer Wellenlänge, beispielsweise im roten oder infraroten Spektralbereich, wird anhand der reflektierenden Fläche 6 des Umlenkmittels 8 und der Objektiveinheit 1a, die gegebenenfalls aus mehreren Einzellinsen besteht, gegen ein Zielobjekt gerichtet. Das am Zielobjekt reflektierte und/oder gestreute Strahlenbündel trifft als Empfangsstrahlenbündel 4 auf die Objektiveinheit 1a und die Linse 1 und weiter auf die Linse 13, welche als eine Spiegeleinheit für das Empfangsstrahlenbündel4 verwendet wird.

Dazu ist die Linse 13 mit einer dichroitischen Schicht ausgeführt, an welcher dichroitischen Schicht Strahlen gleicher Wellenlänge wie derjenigen des Sendesstrahlenbündel 3 in Richtung der reflektierenden Fläche 6'' des Umlenkmittels 8 und/oder der Empfangseinheit 5 reflektiert und/oder gestreut werden. Strahlen anderer Wellenlänge werden von der dichroitischen Beschichtung der Linse 13 durchgelassen. Die Doppelfunktionalität der Linse 13, einerseits als ein Spiegelsystem und andererseits zur Formgebung für die durchgelassenen Strahlen, trägt bei zu einer kompakten und kostengünstigen Bauart des erfindungsgemässen Panfokal-Fernrohrs.

Die durchgelassenen Strahlen werden einerseits im weiteren, in Figurenebene nach rechts verlaufenden, Strahlengang des Panfokal-Fernrohrs, auch als "visueller Kanal" bezeichnet, zum Okular (12) geleitet, wo sie einem Beobachter schliesslich in bekannter Art und Weise zur Verfügung stehen. Andererseits werden von der dichoitischen Schicht der Linse 13 durchgelassene Strahlen teilweise ausgekoppelt. Dazu ist hier das Bildaufrichtsystem 10 mit einer zweiten für Strahlen teildurchlässigen, gegebenenfalls ebenfalls spektral dichroitischen, Schicht 14 zum Auskoppeln von weiteren mittels der ersten und zweiten Objektiveinheit empfangenen Strahlen, beispielsweise für eine Aufnahme mit einer Kamera 15, insbesondere einer Fixfokus-Kamera als Richtungsensor, versehen.

Im optischen Strahlengang des Fernrohrs ist ausserdem ein Strahlteiler 17 zwischen der Fokussiereinheit 11 und dem Okular 12 angeordnet, vermittels welchem vom Bildaufrichtsystem 10 transmittierte und von der Fokussiereinheit 11 gebündelte Strahlen, beispielsweise für eine Bilderfassung mit einer zweiten, insbesondere fokussierbaren, Kamera 16, ausgekoppelt werden können. Der Strahlteiler 17 ist hier als Teilerwürfel mit einer teildurchlässigen, gegebenenfalls spektral dichroitischen, Schicht ausgebildet Zusätzlich zur Funktion der Strahlausspiegelung kann der Strahlenteiler 17 dazu genutzt werden, eine Zielachsenmarkierung 18 in der Bildebene des visuellen Panfokal-Fernrohres zu erzeugen, wofür sonst im Allgemeinen ein zusätzliches Element im optischen Strahlengang des Panfokal-Fernrohres benötigt wird. In der erfindungsgemässen Anzielvorrichtung können verschiedene zusätzliche Mess- und/oder Aufnahmeelemente integriert werden.

Es versteht sich, dass diese dargestellten Figuren nur Beispiele möglicher Ausführungsformen darstellen.

## Patentansprüche

1. Anzieleinrichtung, insbesondere Ziel-Fernrohr, für ein Vermessungsgerät mit Winkel- und insbesondere Entfernungsmessfunktionalität, wobei die Anzieleinrichtung zumindest aufweist
□ eine eine optische Achse (C) definierende Objektiveinheit mit wenigstens einer als Linse oder optische Planplatte ausgebildeten optischen Komponente (1),
□ eine Bild-Einheit, die einen Kamerasensor und/oder ein Okular (12) aufweist, zur Erfassung und/oder Bereitstellung eines Bildes eines anvisierten Zielobjekts,
wobei zwischen der Objektiveinheit und der Bild-Einheit ein optischer Strahlengang definiert ist,
□ eine Sendeeinheit (2) zur Emission von Messstrahlen als Sendestrahlen (3) und/oder eine Empfangseinheit (5) zur Erfassung von Messstrahlen als Empfangsstrahlen (4), und
□ wenigstens ein optisches Umlenkmittel (8) zur Einkopplung der Sendestrahlen (3) in den optischen Strahlengang und/oder zur Auskopplung der Empfangsstrahlen (4) aus dem optischen Strahlengang,
**dadurch gekennzeichnet, dass**
□ die wenigstens eine optische Komponente (1) eine zylinderförmige, sich in Richtung der optischen Achse (C) erstreckende, insbesondere durchgehende, Ausnehmung (7, 7') um die optische Achse (C) aufweist,
□ das Umlenkmittel (8) einen zylinderförmigen, sich derart innerhalb der Ausnehmung (7, 7') erstreckenden und derart mit Form und Ausmass der Ausnehmung (7, 7') korrespondierenden Befestigungs-Abschnitt aufweist, dass sich zwischen Aussenmantelfläche des Befestigungs-Abschnitts und zumindest einem Teil einer durch die Ausnehmung (7, 7') definierten Innenmantelfläche der optischen Komponente ein Klebespalt ergibt, und
□ das Umlenkmittel (8) vermittelt über einen im Klebespalt befindlichen Klebstoff an der wenigstens einen optischen Komponente befestigt ist.

2. Anzieleinrichtung nach Anspruch 1,
**dadurch gekennzeichnet, dass**
sich der Befestigungs-Abschnitt derart innenmantelflächen-berührungsfrei innerhalb der Ausnehmung (7, 7') erstreckt, dass ein durchgängiger Klebespalt mit im Klebespalt befindlichem, gleichmässig verteiltem Klebstoff vorliegt,
insbesondere wobei sich der Befestigungs-Abschnitt im Wesentlichen zentrisch innerhalb der Ausnehmung erstreckt und derart mit Form und Ausmass der Ausnehmung (7, 7') korrespondiert, dass der Klebespalt eine gleichmässige, definierte Weite aufweist und insbesondere rotationssymmetrisch ist.

3. Anzieleinrichtung nach Anspruch 1 oder 2,
**dadurch gekennzeichnet, dass**
die Ausnehmung (7, 7') eine runde, ovale oder vieleckige Grundfläche aufweist, die senkrecht zur optischen Achse gerichtet ist.

4. Anzieleinrichtung nach einem der Ansprüche 1 bis 3,
**dadurch gekennzeichnet, dass**
das optische Umlenkmittel (8) einstückig als ein den Befestigungs-Abschnitt aufweisender Zapfen ausgebildet ist, von dem eine - insbesondere zum Zielobjekt hingewandte - Oberfläche einer Einkoppel-Endseite derart relativ zur optischen Achse abgeschrägt und optisch reflektierend ausgeführt ist, dass die Einkopplung der Sendestrahlen (3) in den Strahlengang in Richtung des Zielobjekts koaxial zur optischen Achse erfolgt.

5. Anzieleinrichtung nach einem der Ansprüche 1 bis 4,
**dadurch gekennzeichnet, dass**
das optische Umlenkmittel (8) einstückig als ein den Befestigungs-Abschnitt aufweisender Zapfen ausgebildet ist, von dem eine - insbesondere vom Zielobjekt weggewandte - Auskoppel-Endseite derart relativ zur optischen Achse abgeschrägt und mit einer reflektierenden Beschichtung versehen ist, dass eine Auskopplung der Empfangsstrahlen (3) aus dem Strahlengang zur der Empfangseinheit (5) hin erfolgt.

6. Anzieleinrichtung nach einem der Ansprüche 1 bis 5,
**dadurch gekennzeichnet, dass**
der Klebstoff aufweist
□ einen thermischen Ausdehnungskoeffizienten von weniger als 60 ppm/K, im Speziellen von weniger als 40 ppm/K, und/oder
□ einen Wasseraufnahmekoeffizienten von weniger als 2%, im Speziellen weniger als 0,5%,
insbesondere wobei der Klebstoff ein Kapillarklebstoff ist, im Speziellen ein UV- Kapillarklebstoff, der durch UV-Licht aushärtbar ist.

7. Anzieleinrichtung nach einem der Ansprüche 1 bis 6,
**dadurch gekennzeichnet, dass**
die Anzieleinrichtung ein Spiegelsystem (9), über welches die Empfangsstrahlen (4) zum Umlenkmittel (8) und/oder zur Empfangseinheit (5) gerichtet wird, aufweist.

8. Anzieleinrichtung nach einem der Ansprüche 1 bis 7,
**dadurch gekennzeichnet, dass**
die Ausnehmung eine Senkung als Reservoir für den bei Befestigung des Umlenkmittels an der optischen Komponente (1) in den Klebespalt einzubringenden Klebstoff aufweist.

9. Anzieleinrichtung nach einem der Ansprüche 1 bis 7, wobei die Ausnehmung (7, 7') als durchgehende Ausnehmung (7, 7') ausgeführt ist,
**dadurch gekennzeichnet, dass**
die durchgehende Ausnehmung (7, 7') aufweist
□ einerends eine erste Senkung als Reservoir für den bei Befestigung des Umlenkmittels in den Klebespalt einzubringenden Klebstoff und
□ anderenends eine zweite Senkung als Klebstoffausbreitungsstopp für den sich bei Befestigung des Umlenkmittels im Klebespalt - insbesondere durch Kapillarkräfte - verteilenden Klebstoff.

10. Optische Baugruppe für eine Objektiveinheit einer Anzieleinrichtung nach einem der Ansprüche 1 bis 9, wobei die optische Baugruppe aufweist
□ wenigstens eine als Linse oder optische Planplatte ausgebildete optische Komponente (1) und
□ wenigstens ein optisches Umlenkmittel (8) zur Einkopplung von Sendestrahlen (3) in den optischen Strahlengang der Anzieleinrichtung und/oder zur Auskopplung von Empfangsstrahlen (4) aus dem optischen Strahlengang,
**dadurch gekennzeichnet, dass**
**□** die wenigstens eine optische Komponente (1) eine zylinderförmige, sich in Richtung der optischen Achse (C) erstreckende, insbesondere durchgehende Ausnehmung (7, 7') um die optische Achse (C) aufweist,
□ das Umlenkmittel (8) einen zylinderförmigen, sich derart innerhalb der Ausnehmung (7, 7') erstreckenden und derart mit Form und Ausmass der Ausnehmung (7, 7') korrespondierenden Befestigungs-Abschnitt aufweist, dass sich zwischen Aussenmantelfläche des Befestigungs-Abschnitts und zumindest einem Teil einer durch die Ausnehmung (7, 7') definierten Innenmantelfläche der optischen Komponente ein Klebespalt ergibt, und
□ das Umlenkmittel (8) vermittelt über einen im Klebespalt befindlichen Klebstoff an der wenigstens einen optischen Komponente befestigt ist.

11. Verfahren zur Herstellung einer optischen Baugruppe nach Anspruch 10,
**dadurch gekennzeichnet, dass**
□ der Befestigungs-Abschnitt des optischen Umlenkmittels (6) in Richtung der optischen Achse der optischen Komponente (1) in die Ausnehmung (7, 7') der optischen Komponente (1) eingeführt wird, wobei die optische Komponente (1) horizontal gelagert und die Längsachse des Befestigungs-Abschnitts parallel oder koaxial zur optischen Achse der optischen Komponente (1) ausgerichtet ist,
□ die optische Komponente (1) und das Umlenkmittel (6) derart gelagert sind, dass das Umlenkmittel und die optische Komponente (1) in einer horizontalen Ebene - im Wesentlichen reibungsfrei - relativ gegeneinander beweglich sind,
□ der Klebstoff in den Klebespalt eingebracht wird, sodass sich unter Wirkung von Eigenspannungen, insbesondere Kapillarkräfte, im Klebstoff dieser sowohl gleichmässig über den Klebespalt verteilt als auch, ebenso bewirkt durch die Eigenspannungen im Klebstoff, ein durchgehender Klebspalt zwischen der Innenmantelfläche der optischen Komponente (1) und der Aussenmantelfläche des Befestigungs-Abschnitts erzeugt wird, und
□ der Klebstoff im gleichmässig über den Klebespalt verteilten Zustand aushärtet, sodass das Umlenkmittel (8) vermittelt über den Klebstoff - mit homogener Spannungsverteilung über den Klebespalt - an der wenigstens einen optischen Komponente (1) befestigt ist.

12. Verfahren nach Anspruch 11,
**dadurch gekennzeichnet, dass**
der Klebstoff sowohl gleichmässig über den Klebespalt verteilt als auch, bewirkt durch die Eigenspannungen im Klebstoff, der Befestigungs-Abschnitt in der Ausnehmung im Wesentlichen zentrisch und somit der Klebespalt mit gleichmässiger Weite zwischen der Innenmantelfläche der optischen Komponente (1) und der Aussenmantelfläche des Befestigungs-Abschnitts erzeugt wird.

13. Verfahren nach einem der Ansprüche 11 oder 12,
**dadurch gekennzeichnet, dass**
zumindest während sich der Klebstoff im Klebespalt verteilt, die optische Komponente (1) oder das Umlenkmittel in einer horizontalen Ebene schwimmend gelagert wird, sodass eine relative Beweglichkeit in einer horizontalen Ebene der optische Komponente (1) und des Umlenkmittels (6) gegeneinander gewährleistet wird.

14. Verfahren nach einem der Ansprüche 11 bis 13,
**dadurch gekennzeichnet, dass**
während des Einbringens, des Verteilens und insbesondere des Aushärtens des Klebstoffs, die optische Komponente (1) zusammen mit dem - mit dem Befestigungs-Abschnitt in die Ausnehmung (7, 7') eingeführten - Umlenkmittel (8) um eine vertikale Achse gedreht wird.

15. Verfahren zur Herstellung einer optischen Baugruppe nach Anspruch 10,
**dadurch gekennzeichnet, dass**
□ der Befestigungs-Abschnitt des optischen Umlenkmittels (6) in Richtung der optischen Achse der optischen Komponente (1) in die Ausnehmung (7, 7') der optischen Komponente (1) eingeführt wird, wobei die Längsachse des Befestigungs-Abschnitts parallel oder koaxial zur optischen Achse der optischen Komponente (1) ausgerichtet ist,
□ der Befestigungs-Abschnitt in der Ausnehmung (7, 7') mit hochpräzisen Verstelleinrichtungen, insbesondere unter Beobachtung des Klebespalts mit einer Mikroskopkamera oder unter Verwendung von Bilderfassungs- und -auswertemitteln, derart justiert wird, dass der Befestigungs-Abschnitt in der Ausnehmung (7, 7') innenmantelflächen-berührungsfrei sitzt und einen durchgehenden Klebespalt zwischen der Innenmantelfläche der optischen Komponente (1) und der Aussenmantelfläche des Befestigungs-Abschnitts aufweist, insbesondere sodass der Befestigungs-Abschnitt im Wesentlichen zentriert in der Ausnehmung (7, 7') sitzt und der Klebspalt eine gleichmässige Weite aufweist, und
□ der Klebstoff in den Klebespalt eingebracht wird und sich unter Wirkung von Eigenspannungen, insbesondere Kapillarkräfte, im Klebstoff gleichmässig über den Klebespalt verteilt und, während die optische Komponente (1) und das Umlenkmittel (8) in der justierten Stellung festgehalten werden, anschliessend - mit homogener Spannungsverteilung über den Klebespalt - aushärtet.

## Claims

1. A sighting device, in particular telescopic sight, for a surveying apparatus having angle and in particular distance measurement functionality, which sighting device comprises at least
□ an objective unit defining an optical axis (C) and having at least one optical component (1) embodied as a lens or an optical planar plate,
□ an image unit which comprises a camera sensor and/or an eyepiece (12), for acquiring and/or providing an image of a sighted target object,
an optical beam path being defined between the objective unit and the image unit,
□ a transmission unit (2) for emitting measurement beams as transmission beams (3) and/or a reception unit (5) for acquiring measurement beams as reception beams (4), and
□ at least one optical deviation means (8) for coupling the transmission beams (3) into the optical beam path and/or for coupling the reception beams (4) out of the optical beam path,
**characterized in that**
□ the at least one optical component (1) comprises a cylindrical, in particular continuous recess (7, 7') around the optical axis (C), which recess extends in the direction of the optical axis (C),
□ the deviation means (8) comprises a cylindrical fastening section extending inside the recess (7, 7') and corresponding in shape and size to the recess (7, 7'), so that a bonding gap is formed between the outer lateral face of the fastening section and at least a part of an inner lateral face, defined by the recess (7, 7'), of the optical component, and
□ the deviation means (8) is fastened to the at least one optical component by means of an adhesive contained in the bonding gap.

2. The sighting device as claimed in claim 1,
**characterized in that**
the fastening section extends inside the recess (7, 7') without contact with the inner lateral face, so that there is a continuous bonding gap with uniformly distributed adhesive contained in the bonding gap,
in particular with the fastening section essentially extending centrally inside the recess and corresponding in shape and size to the recess (7, 7') so that the bonding gap has a uniform defined width and in particular is axisymmetric.

3. The sighting device as claimed in claim 1 or 2,
**characterized in that**
the recess (7, 7') has a round, oval or polygonal base face, which is directed perpendicularly to the optical axis.

4. The sighting device as claimed in one of claims 1 to 3,
**characterized in that**
the optical deviation means (8) is formed integrally as a spigot comprising the fastening section, of which a surface of an input coupling end side - in particular facing toward the target object - is chamfered relative to the optical axis and rendered optically reflective so that the transmission beams (3) are coupled into the beam path in the direction of the target object coaxially with the optical axis.

5. The sighting device as claimed in one of claims 1 to 4,
**characterized in that**
the optical deviation means (8) is formed integrally as a spigot comprising the fastening section, an output coupling end side of which - in particular facing away from the target object - is chamfered relative to the optical axis and provided with a reflective coating so that the reception beams (3) are coupled out of the beam path toward the reception unit (5).

6. The sighting device as claimed in one of claims 1 to 5,
**characterized in that**
the adhesive has
□ a thermal expansion coefficient of less than 60 ppm/K, in particular less than 40 ppm/K and/or
□ a water absorption coefficient of less than 2%, in particular less than 0.5%,
in particular with the adhesive being a capillary adhesive, in particular a UV capillary adhesive, which can be cured by UV light.

7. The sighting device as claimed in one of claims 1 to 6,
**characterized in that**
the sighting device comprises a mirror system (9), by means of which the reception beams (4) are directed toward the deviation means (8) and/or the reception unit (5).

8. The sighting device as claimed in one of claims 1 to 7,
**characterized in that**
the recess comprises a notch as a reservoir for the adhesive to be introduced into the bonding gap when fastening the deviation means on the lens (1).

9. The sighting device as claimed in one of claims 1 to 7,
wherein the recess (7, 7') is configured as a continuous recess (7, 7'),
**characterized in that** the continuous recess (7, 7') comprises
□ on one side a first notch as a reservoir for the adhesive to be introduced into the bonding gap when fastening the deviation means, and
□ on the other side a second notch as an adhesive propagation barrier for the adhesive spreading in the bonding gap - in particular by capillary forces - when fastening the deviation means.

10. An optical assembly for an objective unit of a sighting device as claimed in one of claims 1 to 9,
the optical assembly comprising
□ at least one optical component (1) embodied as a lens or a planar optical plate and
□ at least one optical deviation means (8) for coupling transmission beams (3) into the optical beam path of the sighting device and/or for coupling reception beams (4) out of the optical beam path,
**characterized in that**
□ the at least one loptical component (1) comprises a cylindrical, in particular continuous recess (7, 7') around the optical axis (C), which recess extends in the direction of the optical axis (C)
□ the deviation means (8) comprises a cylindrical fastening section extending inside the recess (7, 7') and corresponding in shape and size to the recess (7, 7'), so that a bonding gap is formed between the outer lateral face of the fastening section and at least a part of an inner lateral face, defined by the recess (7, 7'), of the optical component, and
□ the deviation means (8) is fastened to the at least one optical component by means of an adhesive contained in the bonding gap.

11. A method for producing an optical assembly as claimed in claim 10,
**characterized in that**
□ the fastening section of the optical deviation means (6) is inserted into the recess (7, 7') of the optical component (1) in the direction of the optical axis of the optical component (1), the optical component (1) being mounted horizontally and the longitudinal axis of the fastening section being oriented parallel to or coaxially with the optical axis of the optical component (1),
□ the optical component (1) and the deviation means (6) are mounted so that the deviation means and the optical component (1) are movable relative to one another in a horizontal plane - essentially without friction,
□ the adhesive is introduced into the bonding gap so that under the effect of internal stresses in the adhesive, in particular capillary forces, it is both distributed uniformly over the bonding gap and, likewise owing to the internal stresses in the adhesive, a continuous bonding gap is produced between the inner lateral face of the optical component (1) and the outer lateral face of the fastening section, and
□ the adhesive is cured in the state uniformly distributed over the bonding gap, so that the deviation means (8) is fastened indirectly by means of the adhesive - with a homogeneous stress distribution over the bonding gap - to the at least one optical component (1).

12. The method as claimed in claim 11,
**characterized in that**
the adhesive is both distributed uniformly over the bonding gap and, owing to the internal stresses in the adhesive, the fastening section is essentially centrally in the recess and the bonding gap is produced with a uniform width between the inner lateral face of the optical component (1) and the outer lateral face of the fastening section.

13. The method as claimed in one of claims 11 and 12,
**characterized in that**
at least while the adhesive is being distributed in the bonding gap, the optical component (1) or the deviation means is mounted floating in a horizontal plane so that relative mobility of the optical component (1) and the deviation means (6) relative to one another in a horizontal plane is ensured.

14. The method as claimed in one of claims 11 to 13,
**characterized in that**
during the introduction, distribution and in particular curing of the adhesive, the optical component (1) together with the deviation means (8) - inserted with the fastening section into the recess (7, 7') - is rotated about a vertical axis.

15. A method for producing an optical assembly as claimed in claim 10,
**characterized in that**
□ the fastening section of the optical deviation means (6) is inserted into the recess (7, 7') of the optical component (1) in the direction of the optical axis of the optical component (1), the longitudinal axis of the fastening section being oriented parallel to or coaxially with the optical axis of the optical component (1),
□ the fastening section is adjusted in the recess (7, 7') by high-precision adjustment devices, in particular while observing the bonding gap with a microscope camera or by using image acquisition and evaluation means, so that the fastening section is placed in the recess (7, 7') without contact with the inner lateral face, and has a continuous bonding gap between the inner lateral face of the optical component (1) and the outer lateral face of the fastening section, in particular so that the fastening section is placed essentially centered in the recess (7, 7') and the bonding gap has a uniform width, and
□ the adhesive is introduced into the bonding gap and, under the effect of internal stresses in the adhesive, in particular capillary forces, is distributed uniformly over the bonding gap, and is subsequently cured - with a homogenous stress distribution over the bonding gap - while the optical component (1) and the deviation means (8) are held fixed in the adjusted position.

## Revendications

1. Dispositif de ciblage, en particulier lunette de visée, pour un appareil de prémesure avec fonctionnalité de mesure d'angle et en particulier de mesure de distance, le dispositif de ciblage présentant au moins
□ une unité d'objectif qui définit un axe optique (C) avec au moins un composant optique (1) configuré comme une lentille ou une plaque plane optique,
□ une unité d'image qui présente un capteur de caméra et/ou un oculaire (12) pour la capture et/ou la mise à disposition d'une image d'un objet cible visé, cependant qu'une trajectoire de faisceau optique est définie entre l'unité d'objectif et l'unité d'image,
□ une unité d'émission (2) pour l'émission de faisceaux de mesure comme faisceaux d'émission (3) et/ou une unité de réception (5) pour l'acquisition de faisceaux de mesure comme faisceaux de réception (4) et
□ au moins un moyen de déviation optique (8) pour le couplage des faisceaux d'émission (3) dans la trajectoire de faisceau optique et/ou pour le découplage des faisceaux de réception (4) de la trajectoire de faisceau optique, **caractérisé en ce que**
□ le composant optique qui existe au moins (1) présente un évidement de forme cylindrique, qui s'étend en direction de l'axe optique (C), en particulier un évidement continu (7, 7') autour de l'axe optique (C),
□ le moyen de déviation (8) présente un tronçon de fixation de forme cylindrique, qui s'étend à l'intérieur de l'évidement (7, 7') et qui correspond à la forme et aux dimensions de l'évidement (7, 7') de telle manière qu'il résulte une fente de collage entre la surface d'enveloppe extérieure du tronçon de fixation et au moins une partie d'une surface d'enveloppe intérieure du composant optique qui est définie par l'évidement (7, 8') et
□ le moyen de déviation (8) est fixé au composant optique qui existe au moins, ceci étant causé par une colle qui se trouve dans la fente de collage.

2. Dispositif de ciblage selon la revendication 1,
**caractérisé en ce que** le tronçon de fixation s'étend sans contact avec la surface d'enveloppe intérieure à l'intérieur de l'évidement (7, 7') de telle manière qu'il existe une fente de collage continue avec de la colle qui se trouve dans la fente de collage, répartie uniformément, en particulier cependant que le tronçon de fixation s'étend sensiblement de manière centrée à l'intérieur de l'évidement et correspond à la forme et aux dimensions de l'évidement (7, 7') de telle manière que la fente de collage présente une largeur définie uniforme et est en particulier symétrique en rotation.

3. Dispositif de ciblage selon la revendication 1 ou 2,
**caractérisé en ce que** l'évidement (7, 7') présente une surface de base ronde, ovale ou polygonale qui est orientée perpendiculairement à l'axe optique.

4. Dispositif de ciblage selon l'une des revendications 1 à 3, **caractérisé en ce que** le moyen de déviation optique (8) est configuré en une pièce comme un tourillon qui présente le tronçon de fixation, tourillon dont une surface - en particulier tournée vers l'objet cible - d'un côté d'extrémité de couplage est biseautée par rapport à l'axe optique et est réalisée réfléchissante de telle manière que le couplage des faisceaux d'émission (3) se fait dans la trajectoire de faisceau en direction de l'objet cible de manière coaxiale par rapport à l'axe optique.

5. Dispositif de ciblage selon l'une des revendications 1 à 4, **caractérisé en ce que** le moyen de déviation optique (8) est configuré en une pièce comme un tourillon qui présente le tronçon de fixation, tourillon dont un côté d'extrémité de découplage - en particulier détourné de l'objet cible - est biseauté par rapport à l'axe optique et est pourvu d'un revêtement réfléchissant de telle manière qu'un découplage des faisceaux de réception (3) de la trajectoire de faisceau se fait vers l'unité de réception (5).

6. Dispositif de ciblage selon l'une des revendications 1 à 5, **caractérisé en ce que** la colle présente
□ un coefficient de dilatation thermique de moins de 60 ppm/K, en particulier de moins de 40 ppm/K
et/ou
□ un coefficient d'absorption d'eau de moins de 2%, en particulier de moins de 0,5%,
en particulier cependant que la colle est une colle capillaire, en particulier une colle capillaire résistante aux UV, qui peut être durcie par la lumière ultraviolette.

7. Dispositif de ciblage selon l'une des revendications 1 à 6, **caractérisé en ce que** le dispositif de ciblage présente un système de miroir (9) par lequel les faisceaux de réception (4) sont dirigés vers le moyen de déviation (8) et/ou l'unité de réception (5).

8. Dispositif de ciblage selon l'une des revendications 1 à 7, **caractérisé en ce que** l'évidement présente un abaissement comme réservoir pour la colle qui doit être mise en place dans la fente de collage lors de la fixation du moyen déviation au composant optique (1).

9. Dispositif de ciblage selon l'une des revendications 1 à 7, l'évidement (7, 7') étant réalisé comme un évidement continu (7, 7'), **caractérisé en ce que** l'évidement continu (7, 7') présente
□ à une extrémité un premier abaissement comme réservoir pour la colle qui doit être mise en place dans la fente de collage lors de la fixation du moyen de déviation et
□ à l'autre extrémité un second abaissement comme arrêt de propagation de la colle pour la colle qui doit être répartie dans la fente de collage - en particulier par des forces capillaires.

10. Ensemble optique pour une unité d'objectif d'un dispositif de ciblage selon l'une des revendications 1 à 9, l'ensemble optique présentant
□ au moins un composant optique (1) configuré en tant que lentille ou plaque plane optique et
□ au moins un moyen de déviation optique (8) pour le couplage des faisceaux d'émission (3) dans la trajectoire de faisceau optique et/ou pour le découplage des faisceaux de réception (4) de la trajectoire de faisceau optique, **caractérisé en ce que**
□ le composant optique qui existe au moins (1) présente un évidement de forme cylindrique, qui s'étend en direction de l'axe optique (C), en particulier un évidement continu (7, 7') autour de l'axe optique (C),
□ le moyen de déviation (8) présente un tronçon de fixation de forme cylindrique, qui s'étend à l'intérieur de l'évidement (7, 7') de telle manière et qui correspond à la forme et aux dimensions de l'évidement (7, 7') de telle manière qu'il résulte une fente de collage entre la surface d'enveloppe extérieure du tronçon de fixation et au moins une partie d'une surface d'enveloppe intérieure du composant optique qui est définie par l'évidement (7, 8') et
□ le moyen de déviation (8) est fixé au composant optique qui existe au moins, ceci étant causé par une colle qui se trouve dans la fente de collage.

11. Procédé pour la fabrication d'un ensemble optique selon la revendication 10, **caractérisé en ce que**
□ le tronçon de fixation du moyen de déviation optique (6) est introduit dans l'évidement (7, 7') en direction de l'axe optique du composant optique (6), cependant que le composant optique (1) est positionné horizontalement et l'axe longitudinal du tronçon de fixation est orienté parallèlement ou de manière coaxiale par rapport à l'axe optique du composant optique (1),
□ le composant optique (1) et le moyen de déviation (6) sont positionnés de telle manière que le moyen de déviation et le composant optique (1) sont mobiles relativement l'un à l'autre dans un plan horizontal - substantiellement sans friction,
□ la colle est mise en place dans la fente de collage si bien que la colle, sous l'effet de tensions intrinsèques, en particulier de forces capillaires dans celle-ci, se répartit uniformément sur la fente de collage tout en produisant une fente de collage continue entre la surface d'enveloppe intérieure du composant optique (1) et la surface d'enveloppe extérieure du tronçon de fixation, ceci étant provoqué par les tensions intrinsèques dans la colle et
□ la colle durcit à l'état réparti uniformément sur la fente de collage si bien que le moyen de déviation (8) est fixé au composant optique qui existe au moins (1) avec une répartition homogène de tension sur la fente de collage, ceci étant causé par la colle.

12. Procédé selon la revendication 11, **caractérisé en ce que** la colle est répartie uniformément sur la fente de collage tout en produisant le tronçon de fixation dans l'évidement substantiellement centré, ceci étant dû aux tensions intrinsèques dans la colle, et la fente de collage étant ainsi produite avec une largeur homogène entre la surface d'enveloppe intérieure du composant optique (1) et la surface d'enveloppe extérieure du tronçon de fixation.

13. Procédé selon l'une des revendications 11 ou 12, **caractérisé en ce qu'**au moins pendant que la colle se répartit dans la fente de collage le composant optique (1) ou le moyen de déviation est positionné flottant dans un plan horizontal si bien qu'une mobilité relative est garantie dans un plan horizontal du composant optique (1) et du moyen de déviation l'un par rapport à l'autre.

14. Procédé selon l'une des revendications 11 à 13, **caractérisé en ce que**, pendant la mise en place, la répartition et en particulier le durcissement de la colle, le composant optique (1) est tourné avec le moyen de déviation (8) - introduit avec le tronçon de fixation dans l'évidement (7, 7') - autour d'un axe vertical.

15. Procédé pour la fabrication d'un ensemble optique selon la revendication 10, **caractérisé en ce que**
□ le tronçon de fixation du moyen de déviation optique (6) est introduit dans l'évidement (7, 7') en direction de l'axe optique du composant optique (1), cependant que l'axe longitudinal du tronçon de fixation est orienté parallèlement ou de manière coaxiale par rapport à l'axe optique du composant optique (1),
□ le tronçon de fixation est ajusté dans l'évidement (7, 7') avec des dispositifs de réglage très précis, en particulier en observant la fente de collage avec une caméra microscope ou en utilisant des moyens d'acquisition et d'exploitation d'images de telle manière que le tronçon de fixation est fixé dans l'évidement (7, 7') sans contact avec la surface d'enveloppe intérieure et présente une fente de collage continue entre la surface d'enveloppe intérieure du composant optique (1) et la surface d'enveloppe extérieure du tronçon de fixation, en particulier de telle manière que le tronçon de fixation est essentiellement fixé de la manière centrée dans l'évidement (7, 7') et la fente de collage présente une largeur uniforme et
□ la colle est mise en place dans la fente de collage et se répartit régulièrement sur la fente de collage sous l'effet de tensions intrinsèques, en particulier de forces capillaires, dans la colle et, pendant que le composant optique (1) et le moyen de déviation (8) sont fixés dans la position ajustée, durcit ensuite - avec une répartition homogène de la tension sur la fente de collage.
